(19) Europäisches Patentamt
European Patent Office
Office européen des brevets

(11) EP 2 684 690 B1

(12) EUROPEAN PATENT SPECIFICATION

(45) Date of publication and mention
of the grant of the patent:
21.02.2018 Bulletin 2018/08

(51) Int Cl.:
B32B 21/13 (2006.01)     B32B 27/00 (2006.01)
C08G 59/50 (2006.01)     C08L 63/00 (2006.01)
C09J 133/14 (2006.01)    C09J 183/06 (2006.01)
C09J 143/04 (2006.01)    C09J 171/02 (2006.01)

(21) Application number: 12754979.8

(22) Date of filing: 07.03.2012

(86) International application number:
PCT/JP2012/055815

(87) International publication number:
WO 2012/121288 (13.09.2012 Gazette 2012/37)

(54) **ADHESIVE-BONDED STRUCTURE COMPRISING BOTH ADHESIVE COMPOSITION AND WOOD MATERIAL**

HAFTGEBUNDENE STRUKTUR AUS EINER HAFTSTOFFZUSAMMENSETZUNG UND EINEM HOLZMATERIAL

STRUCTURE À LIAISON ADHÉSIVE COMPRENANT UNE COMPOSITION ADHÉSIVE ET UN MATÉRIAU BOIS

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 09.03.2011 JP 2011051958
15.04.2011 JP 2011091532

(43) Date of publication of application:
15.01.2014 Bulletin 2014/03

(73) Proprietor: Kaneka Corporation
Osaka-shi, Osaka 530-8288 (JP)

(72) Inventors:
• ITANO, Yu
Takasago-shi
Hyogo 676-8688 (JP)
• OKAMOTO, Toshihiko
Takasago-shi
Hyogo 676-8688 (JP)

(74) Representative: Hart-Davis, Jason et al
Cabinet Beau de Loménie
158, rue de l'Université
75340 Paris Cedex 07 (FR)

(56) References cited:
EP-A1- 2 289 997     WO-A1-2009/133811
JP-A- 2004 323 589

• DATABASE WPI Week 200481 Thomson Scientific, London, GB; AN 2004-816704 XP002731174, & JP 2004 323589 A (KANEKA CORP) 18 November 2004 (2004-11-18)

**Description**

TECHNICAL FIELD

The present invention relates to a bonded structure including a wood material and a reactive silyl group-containing organic polymer adhesive that is excellent in strength and boiling water-resistant adhesion.

BACKGROUND ART

Conventional wood adhesives often contain vinyl acetate resin emulsions from the standpoint of workability and cost. Such adhesives containing vinyl acetate resin emulsions commonly have problems in water resistance, heat resistance, and initial adhesion, and thus are not satisfactory at the moment.
Polyurethane adhesives are also suitably used as wood adhesives. Patent Literature 1 discloses an adhesive that contains an amino group-containing polyol and MDI oligomer to exhibit fast curability and excellent boiling water-resistant adhesion. The adhesive, however, contains a highly toxic isocyanate compound, which causes a safety concern.
Examples of an environmentally friendly material having less toxicity include adhesives containing reactive silyl group-containing organic polymers.
Commonly, the adhesives containing reactive silyl group-containing organic polymers are widely used as environmentally friendly adhesives that are excellent in general adhesion and storage stability, as disclosed in Patent Literature 2. However, such adhesives disadvantageously have lower strength than polyurethane adhesives.
EP 2 289 997 A1 discloses a novel acrylic/modified silicone room temperature-curable resin composition that serves as a material for sealants having high moduli and high strength after curing, and a cured product thereof. The room temperature-curable composition includes: a (meth)acrylate ester polymer (A) having a specific silicon-containing functional group and having an alkyl (meth)acrylate ester monomer unit in its molecular chain; and a polyoxyalkylene polymer (B) having a specific silicon functional group.
JP 2004 323589 discloses a curable adhesive composition essentially comprising a polyoxyalkylene polymer (A) having a silicon-containing functional group which is crosslinkable by forming a siloxane bond, a copolymer (B) having a silicon-containing functional group which is crosslinkable by forming a siloxane bond and a molecular chain comprising an alkyl acrylate monomer unit and/or an alkyl methacrylate monomer unit and an epoxy group-containing compound (C), is used. Here, a raw material of the polyoxyalkylene polymer (A) having the silicon-containing functional group is a polyoxyalkylene polymer polymerized using a composite metal cyanide complex catalyst.

CITATION LIST

PATENT LITERATURE

Patent Literature 1: WO 2003/3016368
Patent Literature 2: WO 2009/133811
Patent Literature 3: EP 2 289 997 A1
Patent Literature 4: JP 2004 323589 A

SUMMARY OF INVENTION

TECHNICAL PROBLEM

As described above, development of an environmentally friendly adhesive that is excellent in strength, boiling water-resistant adhesion, and initial adhesion has been desired.

SOLUTION TO PROBLEM

As a result of the intensive studies to solve the above problem, the present inventors have achieved the present invention. The subj ect-matter of the present invention is defined by the claims.

ADVANTAGEOUS EFFECTS OF INVENTION

The bonded structure of the present invention is excellent in strength and boiling water-resistant adhesion.

DESCRIPTION OF EMBODIMENTS

The present invention is specifically described in the following. A silcon-containing group that contains a hydroxyl or hydrolyzable group bonded to a silicon atom and is crosslinkable by formation of a siloxane bond is herein also referred to as "a reactive silyl group".

The (meth) acrylate polymer (A) in the present invention is a polymer having an alkyl acrylate monomer unit and/or alkyl methacrylate monomer unit with a C1-20 alkyl group, and is an acrylic polymer containing a reactive silyl group that is crosslinkable by formation of a siloxane bond and is represented by the formula (1):

$$-SiX_3 \qquad (1)$$

wherein X represents a hydroxyl or hydrolyzable group. In the present invention, (meth)acrylate refers to acrylate and/or methacrylate.

The reactive silyl group in the (meth) acrylate polymer (A) is a group represented by the formula (1) which contains a hydroxyl or hydrolyzable group bonded to a silicon atom and is crosslinkable by formation of a siloxane bond via a reaction that is accelerated by a silanol condensation catalyst.

The hydrolyzable group represented by the X in the formula (1) is not particularly limited, and conventionally known hydrolyzable groups may be used. Specific examples thereof include a hydrogen atom, a halogen atom, an alkoxy group, an acyloxy group, a ketoxymate group, an amino group, an amide group, an acid amide group, an aminooxy group, a mercapto group, and an alkenyloxy group. In particular, an alkoxy group is preferred because it has mild hydrolyzability to be handled easily.

Specific examples of the reactive silyl group represented by the formula (1) include a trimethoxysilyl group, a triethoxysilyl group, a triisopropoxysilyl group, a methoxydiethoxysilyl group, and an ethoxydimethoxysilyl group. A trimethoxysilyl group and a triethoxysilyl group are more preferred because a resulting cured product has high strength. Further, a trimethoxysilyl group is particularly preferred.

An amount of 100 g of the (meth)acrylate polymer (A) contains silicon atoms in an amount of preferably at least 0.04 mol but not more than 0.20 mol, more preferably at least 0.05 mol but not more than 0.10 mol, and still more preferably at least 0.06 mol but not more than 0.09 mol. In the case of 0.04 mmol or less, a resulting cured product tends to have lowered strength. In the case of exceeding 0.20 mmol, a resulting composition tends to have lowered storage stability. The amount of the silicon atoms are calculated by dividing the number of moles of the used reactive silyl group-containing substance by the total weight of monomers and a chain transfer agent.

The number of the reactive silyl group per molecule of the (meth) acrylate polymer (A) is preferably at least 1.0 but not more than 5.0, more preferably at least 1.1 but not more than 3.0, still more preferably at least 1.2 but not more than 2.0, and particularly preferably at least 1.3 but not more than 2.0. In the case of 1.0 or less, a resulting cured product tends to have lowered strength. In the case of exceeding 5.0, a resulting composition tends to have lowered storage stability. The number of the silyl groups per molecule is calculated from the number average molecular weight determined by GPC and the used monomer unit.

The alkyl acrylate monomer unit used in the present invention may be conventionally known ones. Examples thereof include methyl acrylate, ethyl acrylate, n-propyl acrylate, n-butyl acrylate, isobutyl acrylate, tert-butyl acrylate, n-hexyl acrylate, 2-ethylhexyl acrylate, decyl acrylate, undecyl acrylate, lauryl acrylate, tridecyl acrylate, myristyl acrylate, cetyl acrylate, stearyl acrylate, behenyl acrylate, and biphenyl acrylate. The alkyl methacrylate monomer unit used in the present invention may be conventionally known ones. Examples thereof include methyl methacrylate, ethyl methacrylate, n-propyl methacrylate, n-butyl methacrylate, isobutyl methacrylate, tert-butyl methacrylate, n-hexyl methacrylate, 2-ethylhexyl methacrylate, decyl methacrylate, undecyl methacrylate, lauryl methacrylate, tridecyl methacrylate, myristyl methacrylate, cetyl methacrylate, stearyl methacrylate, behenyl methacrylate, and biphenyl methacrylate. The amount of the alkyl (meth) acrylate monomer unit is preferably 50% by weight or more, and more preferably 70% by weight or more in the (meth)acrylate polymer (A).

The (meth) acrylate polymer (A) is preferably an acrylic copolymer with a molecular chain having an alkyl acrylate monomer unit and/or alkyl methacrylate monomer unit (a-1) containing a C1-2 alkyl group and an alkyl acrylate monomer unit and/or alkyl methacrylate monomer unit (a-2) containing a C7-9 alkyl group, from the standpoint of compatibility with the component (B) . The amount of the monomer units (a-1) and (a-2) is preferably 70% by weight or more in the (meth) acrylate polymer (A). The (a-1) and (a-2) may be mixed at any ratio. In terms of the balance between strength and adhesion, the weight ratio (a-1)/(a-2) is preferably 40/60 to 90/10. Preferred examples of the alkyl acrylate and/or alkyl methacrylate monomer units (a-1) containing a C1-2 alkyl group include methyl methacrylate and methyl acrylate. Preferred examples of the alkyl acrylate and/or alkyl methacrylate monomer units (a-2) containing a C7-9 alkyl group include 2-ethylhexyl acrylate and 2-ethylhexyl methacrylate.

The (meth) acrylate polymer (A) may contain, in addition to the alkyl acrylate and/or alkyl methacrylate monomer units, a monomer unit copolymerizable therewith. Examples thereof include: acrylic acids such as acrylic acid or methacrylic acid; monomers containing amide groups (e.g., acrylamide, methacrylamide, N-methylol acrylamide, N-methylol methacrylamide), epoxy groups (e.g., glycidyl acrylate, glycidyl methacrylate), or amino groups (e.g., diethylaminoethyl acrylate, diethylaminoethyl methacrylate, aminoethyl vinyl ether); (meth)acrylates containing a reactive silyl group (e.g., γ-(meth)acryloxypropyl dimethoxymethylsilane, γ-(meth)acryloxypropyl diethoxymethylsilane, γ-(meth)acryloxypropyl diisopropoxymethylsilane) other than those represented by the formula (1); and polyoxyethylene acrylate, and polyoxyethylene methacrylate. In terms of moisture curability and inner curability, polyoxyethylene acrylate and polyoxyethylene methacrylate are expected to have a copolymerization effect. Other examples include monomer units derived from acrylonitrile, styrene, α-methylstyrene, alkyl vinyl ether, vinyl chloride, vinyl acetate, vinyl propionate, and ethylene.

Those skilled in the art commonly determine the monomer composition of the (meth)acrylate polymer (A) in accordance with the applications or purposes. For the application requiring high strength, the (meth) acrylate polymer (A) having a comparatively high softening point Tg are preferably used. The softening point is preferably 0°C or higher and 200°C or lower, and more preferably 20°C or higher and 100°C or lower. If the softening point is lower than 0°C, the effect of improving the strength is unfavorably low. Here, the Tg is calculated by using the following Fox equation.

The Fox equation:

$$1/(Tg(K)) = \Sigma(Mi/Tgi)$$

wherein Mi represents the weight fraction of a monomer i component constituting the polymer, Tgi represents the glass transition temperature (K) of a homopolymer of the monomer i.

The backbone structure of the (meth) acrylate polymer (A) is not particularly limited, and may be a linear or branched structure.

The molecular weight of the (meth)acrylate polymer (A) is not particularly limited. The weight average molecular weight determined by GPC relative to polystyrene standards is preferably 500 to 100,000 in terms of difficulty in polymerization, 1,000 to 30,000 in terms of the balance between strength and viscosity, and 1,500 to 10,000 in terms of handleability such as workability and adhesion. Too low a molecular weight is not preferred because a resulting cured product tends to be brittle. Too high a molecular weight is not preferred because a resulting curable composition tends to be highly viscous.

The method for synthesizing the (meth) acrylate polymer (A) is not particularly limited, and a known method may be employed. Here, polymers obtained by common free radical polymerization in which an azo compound or peroxide is used as a polymerization initiator has the problems that the value of molecular weight distribution is typically as large as two or more and that the viscosity is increased. Accordingly, living radical polymerization is preferably employed for obtaining (meth) acrylate polymers that have a narrow molecular weight distribution and a low viscosity and contain crosslinkable functional groups at molecular chain terminals at a high ratio.

A method more preferred for producing a (meth)acrylate polymer containing a specific functional group among the "living radical polymerization" methods is "atom transfer radical polymerization" in which (meth)acrylate monomers are polymerized using an initiator such as an organic halide or sulfonyl halide compound with a transition metal complex catalyst. This is because the atom transfer radical polymerization provides a polymer terminated with a halogen or the like group which is relatively advantageous to functional-group exchange reactions, and gives a high degree of freedom in selecting an initiator and a catalyst, as well as having the characteristics of "living radical polymerization". Examples of the atom transfer radical polymerization include a method described in Matyjaszewski et al., Journal of the American Chemical Society (J. Am. Chem. Soc.), 1995, vol. 117, p. 5614.

A reactive silyl group-containing (meth)acrylate polymer may be produced by any method. Examples thereof include free radical polymerization with a chain transfer agent, as disclosed in JP-B H03-14068, JP-B H04-55444, JP-A H06-211922, and other documents; and atom transfer radical polymerization as disclosed in JP-A H09-272714 and other documents.

Examples of the free radical polymerization method include, but not limited to, solution polymerization and bulk polymerization by radical reactions. The reaction is commonly carried out by mixing the monomer, a radical initiator, a chain transfer agent, and a solvent at 50 to 150°C.

Examples of the radical initiator include azobisisobutyronitrile and benzoylperoxide. Examples of the chain transfer agent include mercaptans such as n-dodecyl mercaptane, t-dodecyl mercaptane, or lauryl mercaptane, and halogen-containing compounds. The solvent used is preferably a nonreactive solvent such as ethers, hydrocarbons, or esters.

Various methods are available for introducing a reactive silyl group into the (meth)acrylate polymer (A). Examples thereof include a method (I) in which a compound containing a polymerizable unsaturated bond and a reactive silyl group is copolymerized with a monomer, and a method (II) in which copolymerization is carried out in the presence of a reactive silyl group-containing mercaptane as a chain transfer agent, and a combined method of the methods (I) and (II) in which a compound containing a polymerizable unsaturated bond and a reactive silyl group is copolymerized with a monomer in the presence of a reactive silyl group-containing mercaptane as a chain transfer agent.

Examples of the compound containing a polymerizable unsaturated bond and a reactive silyl group in the method (I) include γ-methacryloxypropyl trimethoxysilane, γ-methacryloxypropyl triethoxysilane, γ-acryloxypropyl trimethoxysilane, γ-acryloxypropyl triethoxysilane, methacryloyloxymethyl trimethoxysilane, methacryloyloxymethyl triethoxysilane, vinyltrimethoxysilane, and vinyltriethoxysilane.

Examples of the reactive silyl group-containing mercaptane compound in the method (II) include mercapto group-containing silanes such as γ-mercaptopropyltrimethoxysilane, γ-mercaptopropyltriethoxysilane, mercaptomethyl trimethoxysilane, or mercaptomethyl triethoxysilane.

The (meth) acrylate polymers containing a reactive silyl group may be used alone, or two or more of these may be used in combination.

The component (B) in the present invention is a polyoxyalkylene polymer having an average number of reactive silyl groups represented by the formula (2) per molecule of at least 0 . 5 but not more than 3.0 and a number average molecular weight determined by GPC of at least 3,000 but not more than 60,000.

The oxyalkylene polymer constituting the polymer backbone in the component (B) in the present invention may be those represented by the formula (3):

$$-(-R^3-O-)_n-\qquad(3)$$

wherein $R^3$ represents a divalent C1-4 alkylene group. Examples thereof include $-CH_2O-$, $-CH_2CH_2O-$, $-CH_2CH(CH_3)O-$, $-CH_2CH(C_2H_5)O-$, $-CH_2C(CH_3)_2O-$, and $-CH_2CH_2CH_2CH_2O-$. In particular, oxypropylene polymers are preferred because of its easy availability.

The amount of the monomer unit represented by the formula (3) in the polymer is preferably 50% by weight or more, and more preferably 80% by weight or more.

The polymer of the component (B) in the present invention has a molecular weight of preferably 3,000 to 500,000, more preferably 5,000 to 40,000, and particularly preferably 10, 000 to 35,000 from the standpoint of workability. From the standpoint of viscosity, the molecular weight distribution is preferably narrow and is preferably 1.5 or less.

A known method may be employed as a method for obtaining the component (B) in the present invention. For example, propylene oxide is ring-opening polymerized in the presence of a catalyst and an initiator such as divalent alcohols (e.g., ethylene glycol, propylene glycol, butanediol, hexamethyleneglycol, methallyl alcohol, hydrogenated bisphenol A, neopentyl glycol, polybutadienediol, diethylene glycol, triethylene glycol, polyethylene glycol, polypropylene glycol, dipropylene glycol), or a polymer containing a hydroxyl group. Such a method is preferred also from the standpoint of the storage stability of the produced substance.

From the standpoint of molecular design, an oxyalkylene polymer with a functional group which has a high molecular weight and a narrow molecular weight distribution is often advantageous because of its properties such as viscosity and adhesiveness. Such a polymer is obtained by a special polymerization method using a catalyst such as a cesium metal catalyst, a porphyrin/aluminum complex catalyst as disclosed in JP-A S61-197631, JP-A S61-215622, JP-A S61-215623, and JP S61-218632, a double metal cyanide complex catalyst as disclosed in JP-B S46-27250, and JP-B S59-15336, or a catalyst including polyphosphazene salt as disclosed in JP-A H10-273512. Practically, a double metal cyanide complex catalyst is preferably used.

Examples of the double metal cyanide complex catalyst include $Zn_3[Fe(CN)_6]_2$, $Zn_3[Co(CN)_6]_2$, $Fe[Fe(CN)_6]$, and $Fe[Co(CN)_6]$. More preferably, the double metal cyanide complex catalyst has a structure including $Zn_3[Co(CN)_6]_2$ (i.e., a zinc hexacyanocobaltate complex) as a catalyst skeleton and an organic ligand coordinated thereto.

Such a catalyst is prepared by coordinating an organic ligand to a reaction product obtained by a reaction between a metal halide salt and an alkali metal cyanometalate in water. The metal of the metal halide salt is preferably Zn(II) or Fe (II), and particularly preferably Zn (II). The metal halide salt is preferably zinc chloride. The metal constituting the cyanometalate of the alkali metal cyanometalate is preferably Co (III) or Fe (III), and particularly preferably Co (III). The alkali metal cyanometalate is preferably potassium hexacyanocobaltate. The organic ligand is preferably alcohol and/or ether. Specifically, preferred is one or two or more selected from alcohols such as tert-butyl alcohol, ethanol, sec-butyl alcohol, n-butyl alcohol, isobutyl alcohol, tert-pentyl alcohol, isopentyl alcohol, or isopropyl alcohol, and ethers such as ethylene glycol dimethyl ether (hereinafter, referred to as glyme), diglyme (diethylene glycol dimethyl ether), triglyme (triethylene glycol dimethyl ether), dioxane, or polyethers having a number average molecular weight of 150 to 5,000. In particular, tert-butyl alcohol and/or glyme are preferred.

The alkylene oxide for obtaining the polyoxyalkylene polymer may be any alkylene oxide. Examples thereof include ethylene oxide, propylene oxide, 1,2-butylene oxide, 2,3-butylene oxide, isobutylene oxide, epichlorhydrin, epibromohydrin, methyl glycidyl ether, allyl glycidyl ether, butyl glycidyl ether, 2-ethyl hexylene glycidyl ether, and trifluoropropylene oxide. These may be used alone, or two or more of these may be used in combination. Among these, propylene oxide is particularly preferred in terms of polymerization activity and physical properties of resulting polymers.

The reactive silyl group included in the polyoxyalkylene polymer (B) in the present invention is a group represented by formula (2) below, which contains a hydroxyl or hydrolyzable group bonded to a silicon atom, or a hydrocarbon group and is crosslinkable by formation of a siloxane bond via a reaction accelerated by a silanol condensation catalyst:

$$-SiR^1{}_{3-b}Y_b \qquad (2)$$

wherein $R^1$ represents a C1-10 alkyl group, C6-10 aryl group, or C7-10 aralkyl group; Y represents a hydroxyl or hydrolyzable group; b represents 1, 2, or 3; and when two or more $R^1$'s or Y's are present, they may be the same as or different from each other.

The hydrolyzable group represented by Y in the formula (2) is not particularly limited, and conventionally known hydrolyzable groups may be used. Specific examples thereof include a hydrogen atom, a halogen atom, an alkoxy group, an acyloxy group, a ketoxymate group, an amino group, an amide group, an acid amide group, an aminooxy group, a mercapto group, and an alkenyloxy group. Among these, alkoxy groups are preferred because they have moderate hydrolyzability and easy workability. In particular, a methoxy group is preferred in terms of the curability of a resulting room temperature-curable composition. The $R^1$ is not particularly limited as long as it is a C1-10 alkyl group, C6-10 aryl group, or C7-10 aralkyl group, and conventionally known ones may be used. In terms of synthesis, a methyl or ethyl group is preferred.

Specific examples of the reactive silyl group represented by the formula (2) include a trimethoxysilyl group, a triethoxysilyl group, a triisopropoxysilyl group, a methoxydiethoxysilyl group, an ethoxydimethoxysilyl group, a methyldimethoxysilyl group, a methyldiethoxysilyl group, an ethyldimethoxysilyl group, and an ethyldiethoxysilyl group. In particular, a trimethoxysilyl group, a triethoxysilyl group, and a methyldimethoxysilyl group are preferred, and a trimethoxysilyl group and a methyldimethoxysilyl group are particularly preferred because the activity is high and favorable curability is provided.

The oxyalkylene polymer (B) containing a reactive silyl group preferably has at least one branched chain in terms of the strength of a resulting cured product. For obtaining a room temperature-curable composition with high strength and excellent water resistance, the average number of the reactive silyl groups contained in the polyoxyalkylene polymer (B) is preferably 1 to 4, more preferably 1.1 to 3, still more preferably 1.3 to 2.5, and particularly preferably 1.5 to 2.3 per molecule. If the average number of the reactive silyl group in a molecule is less than 1, the curability is insufficient and high strength is not likely to be exhibited. If the average number of the reactive silyl group in a molecule is more than 4, a resulting cured product tends to have unfavorable elongation characteristics.

In the case of using a silyl group containing a hydrocarbon group in which at least one hydrogen atom on the carbon atoms at positions 1-3 is substituted with an electron-withdrawing group, as a substituent group bonded to the silicon atom in the formula (2), along with a hydrolyzable or hydroxyl group (hereinafter, referred to as an "electron-withdrawing reactive silyl group"), the resulting curable composition exhibits fast curability and fast development of shear strength as compared to the case of an organic polymer containing a reactive silyl group (e.g., dimethoxymethylsilyl group) and also containing an unsubstituted hydrocarbon group such as a methyl group.

Specifically, the use of a substituent group represented by the following formula (4) as $R^1$ in the formula (2) leads to high curability and fast development of shear strength.

$$-CR^4{}_{3-c}W_c \qquad (4)$$

(In the formula, W represents an electron-withdrawing group, $R^4$ represents a hydrogen atom or a C1-19 alkyl group, c represents 1, 2, or 3, when plural Ws or $R^4$s are present, they may be the same as or different from each other.)

The substituent group represented by the formula (4) is one example of $R^1$ in the formula (2) and refers to a hydrocarbon group having an electron-withdrawing group at position 1.

The electron-withdrawing group (W in the formula (4)) is not particularly limited, and examples thereof include: a halogen atom; oxygen substituent groups such as an alkoxy group or an acyloxy group; nitrogen substituent groups such as an amino group, an alkyl amino group, or a ureido group; an acyl group; an alkoxycarbonyl group; a nitro group; a cyano group; a sulfonyl group; a perfluoroalkyl group; and an electron withdrawing aryl group.

Specific examples thereof include: halogen atoms such as a fluorine atom, a chlorine atom, a bromine atom, or an iodine atom; alkoxy groups such as a methoxy, ethoxy, 1-propoxy, 2-propoxy, 1-butoxy, 2-butoxy, tert-butyloxy, octoxy, lauryloxy, phenoxy, or benzyloxy group; acyloxy groups such as an acetoxy, propanoyloxy, or benzoyloxy group; substituted amino groups such as an amino, methylamino, dimethylamino, ethylamino, diethylamino, propylamino, dipropylamino, or diphenylamino group; groups bonded by an urethane or urea bond such as an ureido, or carbamate group; acyl groups such as an acetyl, propanoyl, octanoyl, lauryloyl, or benzoyl group; alkoxycarbonyl groups such as a methoxycarbonyl or tert-butyl oxycarbonyl group; a nitro group; a cyano group; an isocyanate group; sulfonyl groups such as a methyl sulfonyl or toluene sulfonyl group; perfluoroalkyl groups such as a trifluoromethyl, pentafluroethyl, perfluoropropyl, perfluorohexyl, or perfluorooctyl group; and electron-withdrawing aryl groups such as a difluorophenyl or pentafluorophenyl group. Among these, since resulting polymers have high curability, a halogen atom, an alkoxy group, a substituted or unsubstituted amino group, and a trifluoromethyl group are preferred. More preferred are a halogen atom, an alkoxy group, and a substituted or nonsubstituted amino group, and still more preferred are a halogen atom, and a substituted or nonsubstituted amino group. Especially, a chlorine atom and a methoxy group are particularly preferred because they provide high curability, when used with an amine compound that is a curing catalyst, leading to fast development of shear strength.

The reactive silyl group-containing oxyalkylene polymer (the component (B) in the present invention) is preferably obtained by introducing a reactive silyl group into an oxyalkylene polymer containing a functional group.

The reactive silyl group may be introduced by a known method. Exemplary methods are mentioned below.

(i) An unsaturated group-containing oxyalkylene polymer is obtained by a reaction between an oxyalkylene polymer and an organic compound, wherein the oxyalkylene polymer is terminated with a functional group such as a hydroxyl group and the organic compound contains an active group and unsaturated group which are reactive with the functional group. Alternatively, unsaturated group-containing oxyalkylene polymer is obtained by copolymerization of an unsaturated group-containing epoxy compound and an oxyalkylene polymer terminated with a functional group such as a hydroxyl group. Then, the resulting reaction product is hydrosilylated by an action of a hydrosilane containing a reactive silyl group represented by the formula (5):

$$HSiR^1_{3-b}Y_b \qquad (5)$$

wherein $R^1$ represents a C1-10 alkyl group, a C6-10 aryl group, or a C7-10 aralkyl group, Y represents a hydroxyl or hydrolyzable group, b represents 1, 2, or 3, and when two or more $R^1$'s or Y's are present, they may be the same as or different from each other.

(ii) A polyether polymer containing an unsaturated group obtained in the same manner as in the method (i) is reacted with a compound containing a mercapto group and a reactive silyl group.

(iii) An oxyalkylene polymer terminated with a functional group (hereinafter, referred to as a Z functional group) such as a hydroxyl, epoxy, or isocyanate group is reacted with a compound containing a reactive silyl group and a functional group (hereinafter, referred to as a Z' functional group) that is reactive with the Z functional group.

Examples of the hydrosilane containing a reactive silyl group mentioned in the method (i) include: alkoxysilanes such as trimethoxysilane, triethoxysilane, or methyldimethoxysilane; halogenated silanes such as trichlorosilane; acyloxysilanes such as triacetoxysilane; and alkenyloxysilanes such as triisopropenyloxysilane.

Examples of the compound containing a mercapto group and a reactive silyl group mentioned in the method (ii) include mercapto group-containing silanes such as γ-mercaptopropyltrimethoxysilane.

Examples of the silicon compound containing a Z' functional group mentioned in the method (iii) include, but not limited to: amino group-containing silanes such as γ-(2-aminoethyl)aminopropyltrimethoxysilane or γ-aminopropyltriethoxysilane; epoxysilanes such as γ-glycidoxypropyltrimethoxysilane or β-(3,4-epoxycyclohexyl)ethyltrimethoxysilane; vinyl unsaturated-group containing silanes such as vinyltriethoxysilane or γ-methacryloyloxypropyl trimethoxysilane; chlorine atom-containing silanes such as γ-chloropropyltrimethoxysilane; isocyanate-containing silanes such as γ-isocyanatopropyltriethoxysilane and γ-isocyanatopropyltrimethoxysilane.

As the oxyalkylene polymer containing a reactive silyl group, particularly preferred in terms of storage stability is a reactive silyl group-containing oxyalkylene polymer containing a trimethoxysilyl or methyldimethoxysilyl group obtained by the method (i).

In the method (i), the reactive silyl group-containing oxyalkylene polymer containing a trimethoxysilyl group can be obtained by a method using trimethoxysilane. However, since trimethoxysilane has safety problems, preferred is a method in which triethoxysilane that is safer than trimethoxysilane is used in the reaction, and an ethoxy group is converted to a methoxy group using methanol in the presence of a catalyst.

Commonly known catalysts for converting an ethoxy group to a methoxy group are acids, bases, and metal alkoxides. Specific examples thereof include, but not limited to, Bronsted acids (e.g., hydrogen chloride, hydrogen bromide) or bases such as lower amines (e.g., triethylamine). In terms of high activity and less side reactions, hydrogen halides such as hydrogen chloride or hydrogen bromide are preferred, and hydrogen chloride is particularly preferred.

The amount of hydrogen chloride added is preferably 1 to 100 ppm, and more preferably 2 to 30 ppm. If the amount is too large, the polymer may be cured during the reaction or the resulting polymer may be more viscous after storage. The amount of methanol used may be changed in accordance with the methoxy exchange rate of a target organic polymer terminated with a trimethoxysilyl group. For obtaining an organic polymer terminated with a trimethoxysilyl group with a high methoxy exchange rate, a large amount of methanol may be used. Meanwhile, for obtaining an organic polymer terminated with a trimethoxysilyl group with a low methoxy exchange rate, the amount of methanol may be reduced. The amount of methanol used is not particularly limited. From the standpoint of the viscosity during the methoxy exchange reaction and/or the time for methanol recovery after the methoxy exchange and/or the reaction rate of the methoxy exchange, the amount of methanol used is preferably 3 to 30 parts, more preferably 5 to 25 parts, and still more preferably 10 to 20 parts, per 100 parts by weight of the organic polymer. Moreover, the amount of the catalyst may be changed in accordance with the change in the amount of methanol. Such a change enables to stabilize the reaction rate of the methoxy exchange and/or suppress the viscosity increase of the organic polymer terminated with a trimethoxysilyl group during storage.

In the present invention, the catalyst is necessarily removed and/or neutralized after the reaction between the oxyalkylene polymer terminated with an ethoxy group and methanol. If the amount of the residual catalyst is large, the storage stability is lowered. Accordingly, the amount of the residual catalyst needs to be reduced by removal and/or neutralization.

Specific examples of the method for removing the catalyst from the organic polymer include, but not limited to, removal under reduced pressure, and a method in which a catalytic vapor volatilized in a gas phase by heating is neutralized in the gas phase.

Specific examples of the method for neutralizing the catalyst include, but not limited to, a reaction with an epoxy compound and a reaction with a base. Neutralization by a reaction with an epoxy compound is preferred when the production of an organic polymer and the reaction of the organic polymer with methanol are carried out in the same reactor. Here, the organic polymer is terminated with a silicon group in which three hydrolyzable groups including at least one hydrolyzable group other than a methoxy group are bonded to one silicon atom. In such a case, a group VIII transition metal used in the production of an organic polymer terminated with a hydrolyzable group-containing silicon group is not deactivated.

Also, the backbone skeleton of the reactive silyl group-containing oxyalkylene polymer (the component (B) in the present invention) may contain other components such as a urethane bond component as long as the effect of the present invention is not significantly impaired.

The urethane bond component is not particularly limited, and examples thereof include groups (hereinafter, also referred to as amide segments) formed by a reaction between an isocyanate group and an active hydrogen group.

The amide segments are groups represented by the formula (6) :

$$-NR^5\text{-}C(=O)-\qquad(6)$$

wherein $R^5$ represents a hydrogen atom or a monovalent organic group, preferably a C1-20 substituted or nonsubstituted monovalent hydrocarbon group, more preferably a C1-8 substituted or nonsubstituted monovalent hydrocarbon group.

Specific examples of the amide segment include a urethane group formed by a reaction between an isocyanate group and a hydroxyl group; a urea group formed by a reaction between an isocyanate group and an amino group; and a thiourethane group formed by a reaction between an isocyanate group and a mercapto group. In the present invention, examples of the group represented by the formula (6) include groups formed by further reaction of active hydrogen in the urethane, urea, or thiourethane group with an isocyanate group.

An exemplary method for easily producing an oxyalkylene polymer containing an amide segment and a reactive silyl group on the industrial scale is mentioned below. An oxyalkylene polymer terminated with an active hydrogen-containing group is reacted with an excessive amount of a polyisocyanate compound to give a polymer having an isocyanate group at a polyurethane backbone terminal. Then, or at the same time, all or part of the isocyanate group is reacted with the A group of a silicon compound represented by the formula (7):

$$A\text{-}R^6\text{-}SiR^1_{3-b}Y_b\qquad(7)$$

wherein $R^1$, Y, and b are as defined above, $R^6$ represents a divalent organic group, more preferably a C1-20 substituted or nonsubstituted divalent hydrocarbon group, A represents an active hydrogen-containing group selected from a hydroxyl, carboxyl, mercapto, and (primary or secondary) amino groups. Relevant known methods for producing oxyalkylene polymers include those disclosed in JP-B S46-12154 (US Patent No. 3632557), JP-A S58-109529 (US Patent No. 4374237), JP-A S62-13430 (US Patent No. 4645816), JP-A H08-53528 (EP 0676403), JP-A H10-204144 (EP 0831108), JP-T 2003-508561 (US Patent No. 6197912), JP-A H06-211879 (US Patent No. 5364955), JP-A H10-53637 (US Patent No. 5756751), JP-A H11-100427, JP-A 2000-169544, JP-A 2000-169545, JP-A 2002-212415, Japanese Patent No. 3313360, US Patent No. 4067844, US Patent No. 3711445, and JP-A 2001-323040.

Other exemplary methods for producing an oxyalkylene polymer containing an amide segment and a reactive silyl group include a reaction of an oxyalkylene polymer terminated with an active hydrogen-containing group with a reactive silyl group-containing isocyanate compound represented by the formula (8):

$$O=C=N\text{-}R^6\text{-}SiR^1_{3-b}Y_b\qquad(8)$$

wherein $R^1$, $R^6$, Y, and b are as defined above. Relevant known methods for producing oxyalkylene polymers include those disclosed in JP-A H11-279249 (US Patent No. 5990257), JP-A 2000-119365 (US Patent No. 6046270), JP-A S58-29818 (US Patent No. 4345053), JP-A H03-47825 (US Patent No. 5068304), JP-A H11-60724, JP-A 2002-155145, JP-A 2002-249538, WO 03/018658, and WO 03/059981.

Examples of the oxyalkylene polymer terminated with an active hydrogen-containing group include oxyalkylene polymers terminated with a hydroxyl group (polyetherpolyol), oxyalkylene polymers terminated with a thiol group, and oxyalkylene polymers terminated with an amino group. Especially, polyetherpolyol is particularly preferred because a resulting room temperature-curable composition has a low viscosity and favorable workability.

The oxyalkylene polymer having a backbone terminated with a group represented by the formula (9):

$$-O-C(=O)-NH-R^6-SiR^1_{3-b}Y_b \qquad (9)$$

wherein $R^1$, $R^6$, Y, and b are as defined above, which is obtained by a reaction between an oxyalkylene polymer terminated with a hydroxyl group and a reactive silyl group-containing isocyanate compound represented by the formula (8), is preferred because the resulting room temperature-curable composition is excellent in workability and curability. When the b in the formula (9) represents 3, the resulting curable composition is especially excellent in curability and restorability.

Specific examples of the $-R^6-$ include $-CH_2-$, $-CH_2CH_2CH_2-$, and $-CH_2CH_2CH_2CH_2CH_2CH_2-$. In terms of availability, $-CH_2CH_2CH_2-$is more preferred.

Polyetherpolyol to be used may be produced by any method. Preferably, the average number of terminal hydroxyl groups of polyetherpolyol is at least 0.7 per molecular end as an average of all the molecules. Specific examples thereof include oxyalkylene polymers produced using a conventional alkali metal catalyst, and oxyalkylene polymers produced by reacting alkyleneoxide with an initiator such as a polyhydroxy compound having at least two hydroxyl groups in the presence of an double metal cyanide complex or cesium.

Among the above polymerization methods, the method in which a double metal cyanide complex is used is preferred because the resulting oxyalkylene polymer has a low degree of unsaturation, a narrow ratio of Mw/Mn, low viscosity, high acid resistance, and high weather resistance.

Specific examples of the polyisocyanate compound include: aromatic polyisocyanates such as toluene (tolylene) diisocyanate, diphenylmethane diisocyanate, or xylylene diisocyanate; and aliphatic polyisocyanates such as isophorone diisocyanate or hexamethylene diisocyanate.

The silicon compound represented by the formula (7) is not particularly limited, and specific examples thereof include: amino group-containing silanes such as $\gamma$-aminopropyltrimethoxysilane, N-($\beta$-aminoethyl)-$\gamma$-aminopropyltrimethoxysilane, $\gamma$-(N-phenyl)aminopropyltrimethoxysilane, N-ethylaminoisobutyltrimethoxysilane, N-cyclohexylaminomethyl triethoxysilane, N-cyclohexylaminomethyl diethoxymethylsilane, or N-phenylaminomethyl trimethoxysilane; hydroxyl group-containing silanes such as $\gamma$-hydroxypropyl trimethoxysilane; mercapto group-containing silanes such as $\gamma$-mercaptopropyltrimethoxysilane. In addition, as disclosed in JP-A H06-211879 (US Patent No. 5364955), JP-A H10-53637 (US Patent No. 5756751), JP-A H10-204144 (EP 0831108), JP-A 2000-169544, and JP-A 2000-169545, the silicon compound of the formula (7) may also be a Michael addition reaction product between any $\alpha,\beta$-unsaturated carbonyl compound and primary amino group-containing silane, or a Michael addition reaction product between any (meth)acryloyl group-containing silane and a primary amino group-containing compound.

The reactive silyl group-containing isocyanate compound represented by the formula (8) is not particularly limited, and specific examples thereof include $\gamma$-trimethoxysilylpropyl isocyanate, $\gamma$-triethoxysilylpropyl isocyanate, $\gamma$-methyldimethoxysilylpropyl isocyanate, $\gamma$-methyldiethoxysilylpropyl isocyanate, trimethoxysilylmethyl isocyanate, triethoxymethylsilylmethyl isocyanate, dimethoxymethylsilylmethyl isocyanate, and diethoxymethylsilylmethyl isocyanate. The reactive silyl group-containing isocyanate compound represented by the formula (8) may be a compound formed by a reaction between the silicon compound represented by the formula (7) and an excessive amount of the polyisocyanate compound, as disclosed in JP-A 2000-119365 (US Patent No. 6046270).

When too many amide segments are present in the backbone skeleton of the oxyalkylene polymer (the component (B) in the present invention), the viscosity of the component (B) may be high, causing the composition to have poor workability. The amide segment in the backbone skeleton of the component (B), however, is likely to improve the curability of the composition of the present invention. Accordingly, in the case where the backbone skeleton of the component (B) contains amide segments, the average number of the amide segments is preferably 1 to 10, more preferably 1.5 to 7, and particularly preferably 2 to 5 per molecule. If the number is smaller than 1, the curability may not be sufficient. If the number is larger than 10, the component (B) may be highly viscous, causing the composition to have poor workability.

The above oxyalkylene polymers containing a reactive silyl group may be used alone, or two or more of these may be used in combination.

The ratio ((A)/(B)) between the (meth)acrylate polymer (A) and the oxyalkylene polymer (B) in the room temperature-curable composition of the present invention is preferably in a range of 10/90 to 80/20 in weight, from the standpoint of the compatibility, viscosity, and strength of a resulting cured product. The ratio is more preferably 20/80 to 70/30, still more preferably 30/70 to 60/40, and particularly preferably 40/60 to 50/50.

Methods for producing an organic polymer containing a blend of an oxyalkylene polymer containing a reactive silyl group and a (meth) acrylate polymer containing a reactive silyl group are disclosed in, but not limited to, JP-A S59-122541, JP-A S63-112642, JP-A H06-172631, and JP-A H11-116763.

Other examples of the method for producing the organic polymer containing a blend with a (meth)acrylate polymer containing a reactive silyl functional group include polymerization of a (meth) acrylate monomer in the presence of an organic polymer containing a reactive silyl group. This production method is specifically mentioned in, but not limited to, JP-A S59-78223, JP-A S59-168014, JP-A S60-228516, and JP-A S60-228517.

The addition of an additive that improves the hardness of the curable composition of the present invention further improves the boiling water-resistant adhesion. Specific examples of the additive that increases the hardness include epoxy resins and isocyanurate group-containing silane coupling agents, and silica.

Conventionally known ones may be widely used as the epoxy resin (C). Examples thereof include: epoxy resins such as bisphenol A epoxy resins, bisphenol F epoxy resins, bisphenol AD epoxy resins, bisphenol S epoxy resins, hydrogenated epoxy resins of these, glycidyl ester epoxy resins, glycidyl amine epoxy resins, cycloaliphatic epoxy resins, novolac epoxy resins, urethane-modified epoxy resins containing a urethane bond, fluorinated epoxy resins, rubber-modified epoxy resins, which contain polybutadiene or NBR, and flame-retardant epoxy resins such as glycidyl ether of tetrabromo bisphenol A. These epoxy resins (C) may be used alone, or two or more of these may be used in combination. In particular, the bisphenol A epoxy resins are preferred in terms of strength.

In terms of strength, the amount of the epoxy resin is preferably 3 to 50 parts by weight, and particularly preferably 5 to 20 parts by weight, per 100 parts by weight of the (meth) acrylate polymer (A) and the polyoxyalkylene polymer (B) in total. The use of too large an amount of the epoxy resin is not preferred in terms of storage stability. The use of too small an amount, conversely, is not preferred because then the effect of improving the boiling water-resistant adhesion tends to be lowered.

Conventionally known ones may be widely used as the curing agent for the epoxy resin. Specific examples thereof include, but not limited to: primary or secondary amines such as triethylenetetramine, tetraethylenepentamine, diethyl aminopropylamine, N-aminoethyl piperidine, m-xylylenediamine, m-phenylenediamine, diaminodiphenylmethane, diaminodiphenyl sulfone, isophorone diamine, or amine-terminated polyether; tertiary amines such as 2,4,6-tris(dimethylaminomethyl)phenol and tripropylamine, and salts of these tertiary amines; polyamide resins; imidazoles; dicyandiamides; boron trifluoride complex compounds; carboxylic acid anhydrides such as phthalic anhydride, hexahydrophthalic anhydride, tetrahydrophthalic anhydride, dodecenylsuccinic anhydride, pyromellitic anhydride, or chlorendic anhydride; alcohols; phenols; carboxylic acids; and diketone complex compounds of aluminum or zirconium. The curing agents may be used alone, or two or more curing agents may be used in combination.

Since a one-pack type curable composition is obtained, a ketimine compound (D) is used as a curing agent for the epoxy resin. The ketimine compound (D) is stable in a moisture-free state, and is degraded by moisture to primary amine and ketone and the generated primary amine serves as a room temperature-curable curing agent for the epoxy resin. Examples of the ketimine compound (D) include compounds obtained by condensation reaction of amine compounds and carbonyl compounds.

A known amine compound and a known carbonyl compound may be used in synthesis of ketimine. Examples of the amine compound include: diamines such as ethylenediamine, propyrenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, or p,p'-biphenylenediamine; polyvalent amines such as 1,2,3-triaminopropane, triaminobenzene, tris(2-aminoethyl)amine, or tetrakis(aminomethyl)methane; polyalkylenepolyamines such as diethylenetriamine, triethylenetriamine, or tetraethylenepentamine; polyoxyalkylene polyamines; and aminosilanes such as $\gamma$-aminopropyltriethoxysilane, N-($\beta$-aminoethyl)-$\gamma$-aminopropyltrimethoxysilane, or N-($\beta$-aminoethyl)-$\gamma$-aminopropylmethyldimethoxysilane. Examples of the carbonyl compound include: aldehydes such as acetaldehyde, propionaldehyde, n-butylaldehyde, isobutylaldehyde, diethylacetaldehyde, glyoxal, or benzaldehyde; cyclic ketones such as cyclopentanone, trimethyl cyclopentanone, cyclohexanone, and trimethyl cyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, or diisobutyl ketone; and $\beta$-dicarbonyl compounds such as acetylacetone, methyl acetoacetate, ethyl acetoacetate, dimethyl malonate, diethyl malonate, methyl ethyl malonate, or dibenzoyl methane.

When an imino group is present in ketimine, the imino group may be reacted with styrene oxide; glycidyl ethers such as butyl glycidyl ether and allyl glycidyl ether; or glycidyl ester. These ketimines may be used alone, or two or more of these may be used in combination.

In the case where a curing agent for the epoxy resin is used, the amount thereof is preferably 0.1 to 300 parts by weight, more preferably 0.2 to 100 parts by weight, still more preferably 0.5 to 50 parts by weight, and particularly preferably 1 to 30 parts by weight, per 100 parts by weight of the epoxy resin. The amount varies in accordance with the kinds of the epoxy resin and of the curing agent.

A silane coupling agent may be added as a component (E) to the composition of the present invention. The component (E) added further increases the adhesive strength of the bonded structure obtained by bonding the room temperature-curable composition and a wood material. Specific examples thereof include: isocyanate group-containing silanes such as γ-isocyanatopropyltrimethoxysilane, γ-isocyanatopropyltriethoxysilan, γ-isocyanatopropylmethyldiethoxysilane, γ-isocyanatopropylmethyldimethoxysilane, (isocyanate methyl) trimethoxysilane, (isocyanate methyl) dimethoxymethylsilane, (isocyanate methyl)triethoxysilane, or (isocyanate methyl) diethoxymethylsilane; amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(6-aminohexyl)aminopropyltrimethoxysilane, 3-(N-ethylamino)-2-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexyl aminomethyl triethoxysilane, N-cyclohexyl aminomethyl diethoxymethylsilane, N-phenyl aminomethyltrimethoxysilane, (2-aminoethyl)aminomethyltrimethoxysilane, or N,N'-bis[3-(trimethoxysilyl)propyl] ethylenediamine; ketimine silanes such as N-(1,3-dimethyl butylidene)-3-(triethoxysilyl)-1-propaneamine; mercapto group-containing silanes such as γ-mercaptopropyltrimethoxysilane, γ-mercaptopropyltriethoxysilane, γ-mercaptpropylmethyldimethoxysilane, γ-mercaptopropylmethyldiethoxysilane, mercaptomethyltrimethoxysilane, or mercaptomethyltriethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, or β-(3,4-epoxycyclohexyl)ethyltriethoxysilane; carboxysilanes such as β-carboxyethyltriethoxysilane, β-carboxyethylphenyl bis (2-methoxyethoxy) silane, or N-β-(carboxymethyl) aminoethyl-γ-aminopropyltrimethoxysilane; vinyl unsaturated group-containing silanes such as γ-methacryloyloxypropylmethyldimethoxysilane, γ-acryloyloxypropyl triethoxysilane, and methacryloyloxymethyl trimethoxysilane; or halogen-containing silanes such as γ-chloropropyltrimethoxysilane. The silane coupling agent preferably has at least two reactive silyl groups per molecule because the adhesive strength of the resulting bonded structure after a boiling test is further improved.

Examples of the silane coupling agent containing at least two reactive silyl groups per molecule include isocyanurate group-containing silane coupling agents such as tris(3-trimethoxysilylpropyl) isocyanurate, 1,4-bis(triethoxysilyl) benzene, 1,4-bis(trimethoxysilyl)benzene, 1,4-bis(trimethoxysilylmethyl)benzene, 1,4-bis(trimethoxysilylethyl)benzene, 1,3-bis(trimethoxysilylpropyl)benzene, 4,4'-bis(triethoxysilyl)biphenyl, 4,4'-bis(trimethoxysilyl)biphenyl, bis(triethoxysilyl)ethane, bis(trimethoxysilyl)ethane, bis(triethoxysilyl)methane, bis(trimethoxysilyl)methane, bis(triethoxysilyl)ethylene, bis(trimethoxysilyl)ethylene, bis(3-trimethoxysilylpropyl)amine, bis(3-trimethoxysilylpropyl)thiourea, bis(3-trimethoxysilylpropyl)urea, bis(3-trimethoxysilylpropyl)carbonate, bis(3-trimethoxysilylpropyl)-N-methylamine, bis(3-trimethoxysilylpropyl)ethylenediamine, bis(3-trimethoxysilylpropyl)polyethyleneoxide, N,N'-bis[(3-trimethoxysilylpropyl)aminocarbonyl] polyethyleneoxide, bis(trimethoxysilylmethyl)amine, bis(trimethoxysilylmethyl)ethylenediamine, 1,6-bis(trimethoxysilyl)hexane, 1,8-bis(trimethoxysilyl) octane, 1,2-bis(trimethoxysilyl)decane, bis(3-triethoxysilylpropyl)disulfide, bis(3-triethoxysilylpropyl)tetrasulfide, and reaction products of silane coupling agents (e.g., a reaction product of any of the above aminosilanes and any of the above epoxysilanes, a reaction product of any of the above aminosilanes and any of the above isocyanate silanes). Among these, the isocyanurate group-containing silane coupling agents are preferred because they highly improve the adhesive strength of resulting bonded structures after a boiling test.

Examples of the isocyanurate group-containing silane coupling agents include 1,3-bis(trimethoxysilylpropyl) isocyanurate, 1,3-bis(triethoxysilylpropyl)isocyanurate, 1,3-bis (triisopropoxysilylpropyl) isocyanurate, 1,3,5-tris(trimethoxysilylpropyl)isocyanurate, 1,3,5-tris(triethoxysilylpropyl)isocyanurate, 1,3,5-tris(triisopropoxysilylpropyl)isocyanurate, and tris(3-methoxysilylpropyl)cyclotriisocyanurate. From the standpoint of curability and hardness, particularly preferred is 1,3,5-tris(trimethoxysilylpropyl)isocyanurate.

Further, partial condensates of the above silane coupling agents may also be used as silane coupling agents.

The silane coupling agent used in the present application is preferably a water-insoluble silane coupling agent in terms of boiling water-resistant adhesion. The term "water-soluble" refers to a property that 10% or more of a substance can be dissolved in neutral water. When a water-soluble silane coupling agent is used, the contact with water in a boiling test or the like causes elution of the silane coupling agent or reduction in the interactivity between the adherend and the silane coupling agent, leading to reduction in shear strength. In contrast, the use of a water-insoluble silane coupling agent provides a bonded structure having fine shear strength even after a boiling test.

Examples of the water-insoluble silane coupling agent include silane coupling agents other than amino group-containing silanes. Specific examples thereof include the isocyanate group-containing silanes, ketimine silanes, mercapto group-containing silanes, epoxy group-containing silanes, carboxysilanes, vinyl unsaturated group-containing silanes, halogen-containing silanes, or silane coupling agents containing at least two reactive silyl groups per molecule mentioned above.

When a silane coupling agent (E) is used, the amount thereof is preferably 0.1 to 15 parts by weight, more preferably 0.2 to 10 parts by weight, still more preferably 0.5 to 7 parts by weight, and particularly preferably 1 to 5 parts by weight, per 100 parts by weight of the organic polymers containing a reactive silyl group, in terms of the strength of a cured product.

The inorganic filler (F) in the present invention is not particularly limited, and examples thereof include calcium carbonate, magnesium carbonate, titanium oxide, carbon black, diatom earth, china clay, kaolin, clay, talc, wood flour, walnut shell flour, chaff flour, silicic anhydride, quartz powder, aluminum powder, zinc powder, asbestos, glass fiber, carbon fiber, glass beads, alumina, glass balloon, sirasu balloon, silica balloon, calcium oxide, magnesium oxide, and silicon oxide. The inorganic fillers may be used alone, or two or more of them may be used in combination.

Various silicas such as fumed silica, precipitated silica, crystalline silica, or fused silica may be used. From the standpoint of strength, fumed silica is particularly preferred.

The amount of the inorganic filler is preferably 5 to 200 parts by weight, and particularly preferably 10 to 50 parts by weight, per 100 parts by weight of the (meth) acrylate polymer (A) and the polyoxyalkylene polymer (B) in total.

The curable composition of the present invention may contain, in addition to the above agents, additives such as silicates, condensation catalysts, organic fillers, thixotropic agents, plasticizers, and stabilizers.

Specific examples of these additives are disclosed in JP-B H04-69659, JP-B H07-108928, JP-A S63-254149, and JP-A S64-22904.

The composition of the present invention may contain a silicate. The silicate serves as a crosslinking agent, and improves the creep resistance, water-resistant adhesion, and low water absorption of the reactive silyl group-containing organic polymer component which includes the (meth)acrylate polymer (A) and the polyether polymer (B) in the present invention (hereinafter, this component is also referred to as "organic polymers"). Additionally, the silicate also improves the adhesion and the bond durability under high temperature and humidity conditions. The silicate used may be a tetraalkoxysilane or its partial hydrolysis-condensation product. When a silicate is used, the amount thereof is preferably 0.1 to 20 parts by weight, and more preferably 0.5 to 10 parts by weight, per 100 parts by weight in total of the organic polymers. When the amount of the silicate is below that range, the creep resistance, water-resistant adhesion, and low water absorption may not be improved sufficiently. When the amount of the silicate is above the range, elongation of a resulting cured product may be reduced and the curing rate may be lowered.

Specific examples of the silicate include tetraalkoxysilanes (tetraalkyl silicates) such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane, or tetra-t-butoxysilane, and their partial hydrolysis-condensation products.

The partial hydrolysis-condensation product of tetraalkoxysilane is more preferred because it more improves the creep resistance of the composition of the present invention than tetraalkoxysilane.

The partial hydrolysis-condensation product of the tetraalkoxysilane may be prepared as follows. Water is added to tetraalkoxysilane by a known method so that the tetraalkoxysilane is partially hydrolyzed. Then, the resulting product is condensed. The partial hydrolysis condensation product of an organosilicate compound may be a commercial product. Examples of such condensates include methylsilicate 51 and ethylsilicate 40 (both being products of COLCOAT CO., LTD.).

The silicates may be used alone, or two or more of them may be used in combination.

The use of a silicate in the room temperature-curable composition in the present invention provides fine creep resistance and water-resistant adhesion, and low water absorption.

The condensation catalyst is not particularly limited, and a commonly used silanol condensation catalyst that promotes a reaction of a hydrolyzable silyl group. Examples thereof include: titanium compounds such as tetra n-butyl titanate, tetra t-butyl titanate, tetra n-propyltitanate, tetra isopropyl titanate, titanium tetraacetylacetonate, diisopropoxy titanium bis(ethyl acetoacetate), or diisopropoxy titanium bisacetylacetonate; tetravalent organotin compounds such as dibutyltin dilaurate, dibutyltin maleate, dibutyltin phthalate, dibutyltin dioctoate, dibutyltin diethylhexanolate, dibutyltin dimethylmaleate, dibutyltin diethylmaleate, dibutyltin dibutylmaleate, dibutyltin dioctylmaleate, dibutyltin ditridecylmaleate, dibutyltin dibenzylmaleate, dibutyltin diacetate, dioctyltin diethylmaleate, dioctyltin dioctylmaleate, dibutyltin dimethoxide, dibutyltin dinonylphenoxide, dibutenyltin oxide, dibutyltin diacetylacetonate, dibutyltin diethylacetoacetonate, a reaction product of dibutyltin oxide and a silicate compound, or a reaction product of dibutyltin oxide and phthalate ester; organoaluminum compounds such as aluminum tris-acetylacetonate, aluminum tris-ethylacetoacetate, aluminum tri-sec-butoxide, aluminum tri-n-butoxide, aluminum triisopropoxide, isopropoxy aluminum bis ethylacetoacetate, or diisopropoxy aluminum ethylacetoacetate; zirconium compounds such as zirconium tetraacetylacetonate; various metal carboxylates such as tin 2-ethylhexanoate, bismuth 2-ethylhexanoate, titanium 2-ethylhexanoate, zirconium 2-ethylhexanoate, iron 2-ethylhexanoate, tin neodecanoate, bismuth neodecanoate, iron neodecanoate, titanium neodecanoate, or zirconium neodecanoate; various carboxylic acids such as 2-ethyl hexanoic acid or neodecanoic acid; amines such as laurylamine, stearylamine, dioctylamine, oleylamine, triethylenetetramine, 3-lauryloxypropylamine, 3-diethylaminopropylamine, or hexamethylenediamine; pyrimidine compounds such as pyrimidine, 2-aminopyrimidine, 6-amino-2,4-dimethylpyrimidine, 2-amino-4,6-dimethylpyrimidine, 1,4,5,6-tetrahydropyrimidine, 1,2-dimethyl-1,4,5,6-tetrahydropyrimidine (DTP), 1-ethyl-2-methyl-1,4,5,6-tetrahydropyrimidine, 1,2-diethyl-1,4,5,6-tetrahydropyrimidine, 1-n-propyl-2-methyl-1,4,5,6-tetrahydropyrimidine, 2-hydroxy-4,6-dimethylpyrimidine, 1,3-diazanaphthalene, or 2-hydroxy-4-aminopyrimidine; imidazoline compounds such as 2-imidazoline, 2-methyl-2-imidazoline, 2-ethyl-2-imidazoline, 2-propyl-2-imidazoline, 2-vinyl-2-imidazoline, 1-(2-hydroxyethyl)-2-methyl-2-imidazoline, 1,3-dimethyl-2-iminoimidazolidine, or 1-methyl-2-iminoimidazolidine-4-one; amidine compounds such as 1,8-diazabicyclo[5.4.0]undec-7-ene (DBU), 1,5-diazabicyclo[4.3.0]non-5-ene, 2,9-diazabicyclo[4.3.0]non-1,3,5,7-tetraene, or 6-(dibutylamino)-1,8-diazabicyclo(5,4,0)undecene-7 (DBA-DBU); guanidine compounds such as guanidine, dicyandiamide, 1-methylguanidine, 1-ethylguanidine, 1-cyclohexylguanidine, 1-phenylguanidine (PhG), 1,1-dimethylguanidine, 1,3-dimethylguanidine, 1,2-diphenylguanidine, 1,1,3-trimethylguanidine, 1,2,3-trimethylguanidine, 1,1,3,3-tetramethylguanidine, 1,1,2,3,3-pentamethylguanidine (PMG), 3-ethyl-1,1,2,2-tetramethylguanidine, 1,1,2,2-tetramethyl-3-n-propylguanidine, 1,1,2,2-tetramethyl-3-isopropylguanidine, 3-n-butyl-1,1,2,2-tetramethylguanidine, 3-tert-butyl-1,1,2,2-tetramethylguanidine, 1,2,3-tricyclohexylguanidine, 1-benzyl-2,3-dimethylguanidine, 1,5,7-triazabicyclo[4.4.0]-5-decene (TBD), 7-methyl-1,5,7-triazabicyclo[4.4.0]-5-decene (MTBD), 7-ethyl-1,5,7-triazabicyclo[4.4.0]-5-decene, 7-n-propyl-1,5,7-triazabicyclo[4.4.0]-5-decene, 7-isopropyl-1,5,7-triazabicyclo[4.4.0]-5-decene, 7-n-butyl-1,5,7-triazabicyclo[4.4.0]-5-decene, 7-cyclohexyl-1,5,7-triazabicyclo[4.4.0]-5-decene, or 7-n-octyl-1,5,7-triazabicyclo[4.4.0]-5-decene; biguanide compounds such as biguanide, 1-methylbiguanide, 1-ethylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide (TBG), 1-morpholinobiguanide, 1-n-butyl-N2-ethylbiguanide, 1,1'-ethylenebisbiguanide, 1,5-ethylenebiguanide, 1-[3-(diethylamino)propyl]biguanide, 1-[3-(dibutylamino)propyl]biguanide, or N',N"-dihexyl-3,12-diimino-2,4,11,13-tetraazatetradecanediamidine.

Other examples include, in addition to the above compounds, amine compounds, acid phosphate esters, reaction products of acid phosphate esters and amine compounds, saturated or unsaturated polyvalent carboxylic acids or its acid anhydrides, reaction products such as salt of carboxylic compounds and amine compounds, and lead octoate.

The amount of the condensation catalyst needs to be 0.1 to 20 parts by weight per 100 parts by weight in total of the reactive silyl group-containing organic polymers. If the amount is less than 0.1 parts by weight, the curing rate is too slow. If the amount is more than 20 parts by weight, the bench life tends to be too short, resulting in lowered workability. In terms of achieving an appropriate curing rate, the amount is more preferably 0.3 to 8 parts by weight, and particularly preferably 0.5 to 5 parts by weight.

The organic filler is not particularly limited, and examples thereof include woody fillers such as pulp or cotton chips, rubber powder, reclaimed rubber, fine powder of thermoplastic or thermosetting resin, and hollow bodies such as polyethylene. Preferred are plastic microballoons that are surface-treated with inorganic powder and have an average particle size of 5 to 200 $\mu$m and an absolute specific gravity of 0.01 to 0.5. An exemplary method for uniformly dispersing microballoons in the composition is a method using a vibrating stirrer disclosed in JP-A 2001-131428. The organic fillers may be used alone or two or more fillers may be used in combination.

The curable composition of the present invention may optionally contain a thixotropic agent (anti-sagging agent). The use of a thixotropic agent avoids sagging and improves workability. The anti-sagging agent is not particularly limited, and examples thereof include polyamide waxes; hydrogenated castor oil derivatives; metal soaps such as calcium stearate, aluminum stearate, or barium stearate. A composition having high thixotropy and favorable workability is obtainable when rubber powder having a particle size of 10 to 500 pm as disclosed in JP-A H11-349916, or organic fiber as disclosed in JP-A 2003-155389 is used. The thixotropic agents (anti-sagging agents) may be used alone, or two or more of these may be used in combination. The amount of the thixotropic agent is within a range of 0.1 to 20 parts by weight per 100 parts by weight of the organic polymers containing a reactive silyl group.

The composition of the present invention may contain a compound that contains an epoxy group in a molecule. The use of the compound containing an epoxy group increases the restorability of a resulting cured product. Examples thereof include epoxidized unsaturated fats and oils, epoxidized unsaturated fatty acid esters, alicyclic epoxy compounds, epichlorohydrin derivatives and other compounds, and mixtures thereof. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. Among these, E-PS is particularly preferred. The amount of the epoxy compound is preferably in the range of 0.5 to 50 parts by weight per 100 parts by weight of the organic polymers containing a reactive silyl group.

The composition of the present invention may contain a plasticizer as long as it does not significantly lower the adhesive strength of the bonded structure of the present invention. The addition of a plasticizer adjusts the viscosity and slump characteristics of the room temperature-curable composition and the mechanical characteristics such as tensile strength or elongation of a cured product obtained by curing the composition. As mentioned above, however, a plasticizer added to the room temperature-curable composition of the present invention tends to significantly lower the adhesive strength of a resulting bonded structure. Accordingly, the amount of the plasticizer is preferably small. Moreover, it is particularly preferred that the composition should not contain a plasticizer.

The amount of the plasticizer is 20 parts by weight or less, preferably 10 parts by weight or less, more preferably 5 parts by weight or less, and still more preferably 1 part by weight, per 100 parts by weight of the organic polymers containing a reactive silyl group. The plasticizer is particularly preferably not used. If the amount is more than 20 parts by weight, the adhesive strength of a resulting bonded structure is not sufficient.

Examples of the plasticizer include: phthalate esters such as dibutyl phthalate, diheptyl phthalate, di(2-ethylhexyl)phthalate, or butyl benzyl phthalate; nonaromatic dibasic acid esters such as dioctyl adipate, dioctyl sebacate, dibutyl sebacate, or isodecyl succinate; aliphatic esters such as butyl oleate, and methyl acetylricinoleate; phosphate esters such as tricresyl phosphate, or tributyl phosphate; trimellitate esters; chlorinated paraffins; hydrocarbon oils such as alkyl diphenyl, or partially hydrogenated terphenyl; process oils; and epoxy plasticizers such as epoxidized soybean oil or epoxystearic acid benzyl ester.

Also, polymer plasticizers may be used. In the case of using a polymer plasticizer, the initial physical properties of a resulting cured product can be maintained for a long period of time compared with the case of using a low-molecular-weight plasticizer which is a plasticizer containing no polymer moiety in the molecule. The drying properties (also referred to as coating properties) of an alkyd coating material applied to the cured product can also be improved. Specific examples of the polymer plasticizer include, but not limited to: vinyl polymers obtained by polymerizing vinyl monomers by various methods; esters of polyalkylene glycols, such as diethylene glycol dibenzoate, triethylene glycol dibenzoate, and pentaerythritol esters; polyester plasticizers obtained from dibasic acids (e.g., sebacic acid, adipic acid, azelaic acid, phthalic acid) and divalent alcohols (e.g., ethylene glycol, diethylene glycol, triethylene glycol, propylene glycol, dipropylene glycol); polyethers such as polyether polyols (e.g., polyethylene glycol, polypropylene glycol, and polytetramethylene glycol which have a molecular weight of 500 or higher, or even a molecular weight of 1000 or higher) and derivatives thereof obtained by replacing the hydroxyl groups of these polyether polyols with ester groups, ether groups or other groups; polystyrenes such as polystyrene and poly-$\alpha$-methylstyrene; polybutadiene; polybutene; polyisobutylene; butadiene-acrylonitrile; and polychloroprene.

Among these polymer plasticizers, ones compatible with organic polymers containing a reactive silyl group are preferred. In this respect, polyethers and vinyl polymers are preferred. It is preferred to use polyethers as plasticizers because the surface curability and depth curability are improved and curing retardation will not occur after storage. Among these, polypropyrene glycol is more preferred. In terms of compatibility, weather resistance, and heat resistance, vinyl polymers are preferred. Among vinyl polymers, acrylic polymers and/or methacrylic polymers are preferred, and acrylic polymers such as polyalkyl acrylates are more preferred. The polymers may preferably be synthesized by living radical polymerization, and more preferably by atom transfer radical polymerization because these methods enable the production of polymers having a narrow molecular weight distribution and low viscosity. Also preferred are polymers produced by the so-called SGO process in which alkyl acrylate monomers are continuously bulk-polymerized under high-temperature and high-pressure conditions, as disclosed in JP-A 2001-207157.

The number average molecular weight of the polymer plasticizer is preferably 500 to 15,000, more preferably 800 to 10,000, still more preferably 1,000 to 8,000, particularly preferably 1,000 to 5,000, and most preferably 1,000 to 3,000. If the molecular weight is too small, the plasticizer exudes due to heat or rain over time, and therefore the initial physical properties cannot be maintained for a long period of time and the alkyd coating properties cannot be improved. If the molecular weight is too large, the viscosity becomes high and the workability is deteriorated. The molecular weight distribution of the polymer plasticizer is not particularly limited but is preferably narrow; the molecular weight distribution is preferably less than 1.80, more preferably 1.70 or less, still more preferably 1.60 or less, even more preferably 1.50 or less, particularly preferably 1.40 or less, and most preferably 1.30 or less.

The number average molecular weight is measured by the GPC method in the case of a vinyl polymer, and is measured by terminal group analysis in the case of a polyether polymer. Also, the molecular weight distribution (Mw/Mn) is measured by GPC (relative to polystyrene standards).

The polymer plasticizer may or may not contain a reactive silyl group. When containing a reactive silyl group, the polymer plasticizer functions as a reactive plasticizer to prevent the plasticizer from migrating from the cured product. When the polymer plasticizer contains a reactive silyl group, the average number of reactive silyl groups is preferably 1 or less, and more preferably 0.8 or less per molecule. When a reactive silyl group-containing plasticizer, particularly a reactive silyl group-containing oxyalkylene polymer is used, the number average molecular weight thereof needs to be lower than that of the organic polymers containing a reactive silyl group.

The plasticizers may be used alone, or two or more plasticizers may be used in combination. Also, a low-molecular-weight plasticizer and a polymer plasticizer may be used in combination. The plasticizer may also be added at the time of polymer production.

The composition of the present invention may contain a tackifier. A tackifying resin is not particularly limited, and a commonly used resin may be used regardless whether it is solid or liquid at room temperature. Specific examples thereof include styrene block copolymers and hydrogenated products thereof, phenol resins, modified phenol resins (e.g., cashew oil-modified phenol resin, tall oil-modified phenol resin), terpene phenol resins, xylene-phenol resins, cyclopentadiene-phenol resin, coumarone-indene resins, rosin resins, rosin ester resins, hydrogenated rosin ester resins, xylene resins, low-molecular-weight polystyrene resins, styrene copolymer resins, petroleum resins (e.g., C5 hydrocarbon resin, C9 hydrocarbon resin, C5C9 hydrocarbon copolymer resin), hydrogenated petroleum resins, terpene resins, DCPD resins, and other petroleum resins. These may be used alone, or two or more of these may be used in combination. Examples of the styrene block copolymers and hydrogenated products thereof include styrene-butadiene-styrene block copolymers (SBS), styrene-isoprene-styrene block copolymers (SIS), styrene-ethylene-butylene-styrene block copolymers (SEBS), styrene-ethylene-propylene-styrene block copolymers (SEPS), and styrene-isobutylene-styrene block copolymers (SIBS) . The above tackifying resins may be used alone, or two or more of these may be used in combination.

The amount of the tackifying resin is in a range of 5 to 1,000 parts by weight, and preferably in a range of 10 to 100 parts by weight, per 100 parts by weight of the organic polymers.

The composition of the present invention may contain a thermoplastic elastomer. The thermoplastic elastomer is not particularly limited, and examples thereof include styrene block copolymers and hydrogenated products thereof. Specific examples of the styrene block copolymer and hydrogenated products thereof include styrene-butadiene-styrene block copolymers (SBS), styrene-isoprene-styrene block copolymers (SIS), styrene-ethylene-butylene-styrene block copolymers (SEBS), styrene-ethylene-propylene-styrene block copolymers (SEPS), styrene-isobutylene-styrene block copolymers (SIBS), and modified styrene-ethylene-butylene block copolymers. The thermoplastic elastomers may be used alone, or two or more of these may be used in combination.

The addition of a large amount of thermoplastic elastomer tends to lead to the formation of a non-uniform composition with poor compatibility. In terms of storage stability and restorability, the amount is preferably at most 20 parts by weight, more preferably at most 10 parts by weight, and still more preferably at most 5 parts by weight, per 100 parts by weight of the organic polymers containing a reactive silyl group. Particularly preferably, the composition does not contain thermoplastic elastomers.

The composition of the present invention may contain liquid polyisoprene polymers. The liquid polyisoprene polymers are not particularly limited, specific examples thereof include liquid polyisoprene homopolymers, copolymers of isoprene and styrene, copolymers of isoprene and butadiene, maleic anhydride-modified polyisoprene, and hydrogenated polyisoprene. The proportion of the isoprene monomer unit in the liquid polyisoprene polymers is not particularly limited, and is preferably 50% by weight or more. In the case of hydrogenated polyisoprene, the proportion of the isoprene monomer unit may be indicated by that in the polymer before hydrogenation, and the proportion of the isoprene monomer unit in the polymers is preferably 50% by weight or more. Specific examples of a commercial product include LIR manufactured by KURARAY C<O. , LTD. The liquid polyisoprene polymers may be used alone, or two or more of these may be used in combination.

The addition of a large amount of liquid polyisoprene polymer tends to lead to the formation of a non-uniform composition with poor compatibility. In terms of storage stability and restorability, the amount is preferably at most 20 parts by weight, more preferably at most 10 parts by weight, and still more preferably at most 4 parts by weight, per 100 parts by weight of the organic polymers containing a reactive silyl group. Particularly preferably, the composition does not contain liquid polyisoprene polymers.

The room temperature-curable composition of the present invention may optionally contain a compound that generates a compound containing a monovalent silanol group in a molecule by hydrolysis. The compound lowers the modulus of a resulting cured product without deteriorating the surface stickiness of the cured product. Especially, a compound generating trimethylsilanol is preferred. Examples of the compound generating a compound containing a monovalent silanol group in a molecule by hydrolysis include compounds as disclosed in JP-A H05-117521. The examples further include: compounds that are derivatives of alkyl alcohols such as hexanol, octanol, or decanol and generate a silicon compound generating $R_3SiOH$ such as trimethylsilanol by hydrolysis; and compounds disclosed in JP-A H11-241029, which are derivatives of polyvalent alcohols with the number of hydroxyl groups of three or more, such as trimethylolpropane, glycerin, pentaerythritol, or sorbitol, and which generate $R_3SiOH$ such as trimethylsilanol by hydrolysis.

The examples further include compounds as disclosed in JP-A H07-258534, which generate silicon compounds that are derivatives of oxypropylene polymers and generate $R_3SiOH$ such as trimethylsilanol by hydrolysis; and polymers disclosed in JP-A H06-279693, which contain a cross-linkable, hydrolyzable silyl group and a silyl group that can form a monosilanol-containing compound by hydrolysis.

The amount of the compound that generates a compound containing a monovalent silanol group in a molecule by hydrolysis is in a range of 0.1 to 20 parts by weight, and preferably in a range of 0.5 to 10 parts by weight, per 100 parts by weight of the organic polymers containing a reactive silyl group.

The composition of the present invention may contain a photocurable substance. The use of a photocurable substance results in the formation of a film of the photocurable substance on the surface of a cured product, which improves the stickiness and weather resistance of the cured product. The molecular structure of a photocurable substance is chemically changed by light in a very short time, and thereby has a physical change such as curing. There are many known examples of such a compound including organic monomers, oligomers, resins or compositions containing these, and any of commercial products may be used. Typical examples thereof include unsaturated acrylic compounds, polyvinyl cinnamates, and azidized resins. The unsaturated acrylic compound includes monomers, oligomers, or mixtures of these which have one or more acrylic or methacrylic unsaturated groups. Examples thereof include monomers such as propylene (or butylene, ethylene) glycol di(meth)acrylate or neopentylglycol di(meth)acrylate and oligo esters having a molecular weight of 10,000 or less. Specific examples thereof include special acrylates, such as ARONIX M-210, ARONIX M-215, ARONIX M-220, ARONIX M-233, ARONIX M-240, or ARONIX M-245 (all being bifunctional), ARONIX M-305, ARONIX M-309, ARONIX M-310, ARONIX M-315, ARONIX M-320, ARONIX M-325 (all being trifunctional), and ARONIX M-400 (polyfunctional). In particular, an acrylic functional group-containing compound is preferred, and a compound having at least three same functional groups per molecule on average (all ARONIX products are manufactured by TOAGOSEI CO., LTD.) is more preferred.

Examples of the polyvinyl cinnamates include various polyvinyl cinnamate derivatives such as photosensitive resins containing a cinnamoyl group as a photosensitive group which are obtained by esterifying polyvinyl alcohol with cinnamic acid. The azidized resins are known as photosensitive resins containing an azide group as a photosensitive group and examples thereof include photosensitive rubber solutions typically containing a diazide compound as a photosensitizer. Detailed examples of the resin are also described in "Kankosei Jushi (Photosensitive Resins)" (published on March 17, 1972 by Insatsu Gakkai Shuppanbu Ltd., p. 93 ff., p. 106 ff., and p. 117 ff.). These resins may be used alone or in admixture, optionally with a sensitizer. The addition of a sensitizer such as ketones and nitro compounds or a promoter such as amines may enhance the effect. The amount of the photocurable substance is in a range of 0.1 to 20 parts by weight, and preferably in a range of 0.5 to 10 parts by weight, per 100 parts by weight of the organic polymers containing a reactive silyl group. If the amount is less than 0.1 parts by weight, the effect of increasing the weather resistance cannot be obtained. If the amount is more than 20 parts by weight, a resulting cured product is too hard, leading to occurrence of cracks.

The composition of the present invention may contain an oxygen-curable substance. Examples of the oxygen-curable substance include unsaturated compounds that can react with oxygen in the air, and these compounds react with oxygen in the air to form a cured layer around the surface of the cured product, thereby preventing the sticky surface of the cured product and adhesion of dirt or dust to the surface. Specific examples of the oxygen-curable substance include drying oils such as tung oil and linseed oil, and various alkyd resins formed by modification of such compounds; drying oil-modified acrylic polymers, epoxy resins, and silicon resins; liquid polymers such as 1,2-polybutadiene, 1,4-polybutadiene, and C5-8 diene polymers, which are obtainable by polymerizing or copolymerizing diene compounds such as butadiene, chloroprene, isoprene, and 1,3-pentadiene; liquid copolymers such as NBR and SBR, which are obtainable by copolymerizing such a diene compound and a monomer copolymerizable therewith (e.g. acrylonitrile, styrene) such that the diene compound serves as the main component; and various modified products thereof (e.g. maleic-acid-modified products, boiled-oil-modified products). These may be used alone, or two or more of these may be used in combination. Among these, tung oil and liquid diene polymers are particularly preferred. Use in combination with a catalyst or metal dryer for promoting the oxidative curing reaction may enhance the effect. Examples of the catalyst and metal dryer include metal salts such as cobalt naphthenate, lead naphthenate, zirconium naphthenate, cobalt octylate, and zirconium octylate, and amine compounds. The amount of the oxygen-curable substance is preferably 0.1 to 20 parts by weight, and more preferably 0.5 to 10 parts by weight, per 100 parts by weight of the reactive silyl group-containing organic polymers. An amount less than 0.1 parts by weight is likely to result in insufficient improvement of stain resistance, while an amount more than 20 parts by weight tends to deteriorate the tensile properties and the like of the cured product. As described in JP-A H03-160053, the oxygen-curable substance is preferably used in combination with a photo-curable substance.

Specific examples of the stabilizer include antioxidants, light stabilizers, and ultraviolet absorbers.

The composition of the present invention may contain an antioxidant (age resistor). The use of an antioxidant enhances the heat resistance of a resulting cured product. Examples of the antioxidant include hindered phenol antioxidants, monophenol antioxidants, bisphenol antioxidants, and polyphenol antioxidants. Particularly preferred are hindered phenol antioxidants. Further, the following hindered amine light stabilizers can also be used: TINUVIN 622LD, TINUVIN 144, CHIMASSORB 944LD, and CHIMASSORB 119FL (all being products of Ciba Specialty Chemicals Co., Ltd.); MARK LA-57, MARK LA-62, MARK LA-67, MARK LA-63, and MARK LA-68 (all being products of Asahi Denka Co., Ltd.); and SANOL LS-770, SANOL LS-765, SANOL LS-292, SANOL LS-2626, SANOL LS-1114, and SANOL LS-744 (all being products of SANKYO CO., LTD.) . Specific examples of the antioxidant also include ones disclosed in JP-A H04-283259 and JP-A H09-194731. The amount of the antioxidant is preferably 0.1 to 10 parts by weight, and more preferably 0.2 to 5 parts by weight, per 100 parts by weight of the reactive silyl group-containing organic polymers.

The composition of the present invention may contain a light stabilizer. The use of a light stabilizer enables to prevent photooxidative degradation of a resulting cured product. Examples of the light stabilizer include benzotriazole compounds, hindered amine compounds, and benzoate compounds. Particularly preferred are hindered amine compounds. The amount of the light stabilizer is preferably 0.1 to 10 parts by weight, and more preferably 0.2 to 5 parts by weight, per 100 parts by weight of the organic polymers containing a reactive silyl group. Specific examples of the light stabilizer include those disclosed in JP-A H09-194731.

In the case that the curable composition of the present invention also contains a photo-curable substance, particularly an unsaturated acrylic compound, a tertiary amine-containing hindered amine light stabilizer is preferably

16

used as the hindered amine light stabilizer in terms of improving the storage stability of the composition, as described in JP-A H05-70531. Examples of the tertiary amine-containing hindered amine light stabilizer include TINUVIN 622LD, TINUVIN 144, and CHIMASSORB 119FL (all being products of Ciba Specialty Chemicals Co., Ltd.); MARK LA-57, LA-62, LA-67, and LA-63 (all being products of Asahi Denka Co. , Ltd.); and SANOL LS-765, LS-292, LS-2626, LS-1114, and LS-744 (all being products of SANKYO CO., LTD.).

The composition of the present invention may contain an ultraviolet absorber. The use of an ultraviolet absorber enables to increase the surface weather resistance of a resulting cured product. Examples of the ultraviolet absorber include benzophenone compounds, benzotriazole compounds, salicylate compounds, substituted tolyl compounds, and metal chelate compounds. Particularly preferred are benzotriazole compounds. The amount of the ultraviolet absorber is preferably 0.1 to 10 parts by weight, and more preferably 0.2 to 5 parts by weight, per 100 parts by weight of the organic polymers containing a reactive silyl group. It is preferred to use a phenol or hindered phenol antioxidant, a hindered amine light stabilizer, and a benzotriazole ultraviolet absorber in combination.

The room temperature-curable composition of the present invention may optionally contain various additives for adjustment of physical properties of the curable composition or cured product. Examples of the additives include surface tack modifiers, curability modifiers, radical inhibitors, lubricants, pigments, blowing agents, solvents, and antifungal agents . These various additives may be used alone, or two or more of these may be used in combination.

Specific examples of the additives are described in, for example, JP-B H04-69659, JP-B H07-108928, JP-A S63-254149, and JP-A S64-22904.

The composition of the present invention may contain a compound having at least two amino groups per molecule. The use of such a compound improves the surface tackiness. Specific examples thereof include 4,4'-methylenebis(cyclohexylamine), bishexamethylenetriamine, and N-octadecyl-1,3-propanediamine.

The composition of the present invention may contain a curability modifier. The use of a curability modifier improves the storage stability of the composition. Examples of the curability modifier include compounds containing an aliphatic unsaturated bond, organophosphorus compounds, organosulfur compounds, nitrogen-containing compounds, tin compounds, and organic peroxides. Each of these may be used in combination. Examples of the aliphatic unsaturated bond-containing compounds include propargyl alcohols, ene-yne compounds, and maleates. Examples of the organophosphorus compounds include triorganophosphines, diorganophosphines, organophosphones, and triorganophosphites. Examples of the organosulfur compounds include organomercaptanes, diorganosulfides, hydrogen sulfide, benzothiazole, and benzothiazole disulfide. Examples of the nitrogen-containing compounds include ammonium, primary to tertiary alkyl amines, arylamines, urea, and hydrazine. Examples of the tin compounds include stannous halide dehydrate and stannous carboxylate. Examples of the organic peroxides include di-t-butylperoxide, dicumylperoxide, benzoylperoxide, and t-butylperbenzoic acid.

Among these curability modifiers, benzothiazole, thiazole, dimethyl maleate, 3-hydroxy-3- methyl-1-butyne, and 1-ethinyl-1-cyclohexanol are preferred in terms of achieving a favorable modification effect and of fine availability of raw materials.

Examples of the radical inhibitor include phenol radical inhibitors such as 2,2'-methylene-bis(4-methyl-6-t-butylphenol), tetrakis(methylene-3(3,5-di-t-butyl-4-hydroxyphenyl) propionate)methane, and amine radical inhibitors such as phenyl-$\beta$-naphthylamine, $\alpha$-naphthylamine, N,N'-secondary butyl-p-phenylenediamine, phenothiazine, and N,N'-diphenyl-p-phenylenediamine.

Preferred examples of the lubricant include, but not particularly limited to, ester lubricants, polyethylene lubricants, polypropylene lubricants, hydrocarbon lubricants, and silicone oil. Other examples include organic fatty acids such as montanoic acid wax or stearic acid, organic acid amides such as octadecanamide, and organic metallic salts such as magnesium stearate or calcium stearate. These may be used alone, or a plurality of these may be used in combination. Here, the polyethylene lubricants and the polypropylene lubricants respectively include oxidized polyethylene lubricants and oxidized polypropylene lubricants.

Examples of the lubricants and silicone oil are mentioned below. It is to be noted that the lubricants and silicone oil are not limited to these examples.

Examples of the ester lubricants include: TALLOW HARDENED OIL 45° HO (melting point: 45°C), TALLOW HARDENED OIL 51° HO (melting point: 51°C), TALLOW HARDENED OIL 54° HO (melting point: 54°C), and TALLOW HARDENED OIL EXTREMELY HARD (melting point: 60°C) (all being products of NOF CORPORATION); Licowax E (drop point: 79 to 85°C), Licowax F (drop point: 77 to 83°C), Licowax KP (drop point: 81 to 87°C), Licowax KP303 (drop point: 86 to 92°C), Licowax KPS (drop point: 80 to 85°C), Licowax KSL (drop point: 79 to 85°C), Licowax KFO (drop point: 86 to 92°C), Licowax KST (drop point: 56 to 63°C), Licowax WE4 (drop point: 78 to 85°C), Licowax WE40 (drop point: 73 to 79°C), Licowax BJ (drop point: 72 to 78°C), Licowax RT (drop point: 77 to 83°C), Licowax KPE (drop point: 79 to 85°C), Licowax KLE (drop point: 82 to 88°C), Licowax NE (drop point: 74 to 82°C), and Licowax X102 (drop point: 81 to 87°C) (all being products of Clariant Japan, drop point is quoted from the catalog). Among these, TALLOW HARDENED OIL EXTREMELY HARD is preferred.

Examples of the polyethylene lubricants include Licowax PE520, Licowax PE130, Licowax PE190, Licowax PE810, Licowax PE820, Licowax PE830, Licowax PE840, Ceridust 130, Ceridust 3620, and Ceridust 3615, and examples of the oxidized polyethylene lubricants include Licolub H12, Licolub H22, Licowax PED521, Licowax PED522, Licowax PED121, Licowax PED136, Licowax PED153, Licowax PED191, Licowax PED192, Licowax PED1101, Licowax PED821, Licowax PED822, Ceridust 3715, and Ceridust 3719 (all being products of Clariant Japan).

Examples of the polypropylene lubricants include Licowax PP230, Licowax VP-PP220, and Ceridust VP6071, and examples of the oxidized polypropylene lubricants include Licomont AR504 (all being products of Clariant Japan).

Examples of the hydrocarbon lubricants include Licowax R21 and Licolub H4 (both being products of Clariant Japan).

The silicon oil may be a silicon oil other than the modified polyorganosiloxane (B) containing a polyether group. Examples thereof include TSF451 (dimethyl silicone oil), TSF410 (higher fatty acid-modified silicone oil), TSF4427 (alkylaralkyl-modified silicone oil), TSF4421 (alkyl-modified silicone oil), TSF484 (methylhydrogen silicone oil), and TSF431 (methylphenyl silicone oil) (all being products of GE Toshiba Silicones), amino group-modified silicone oil, epoxy group-modified silicone oil, and alkoxy group-modified silicone oil. Examples of the amino group-modified silicone oil include TSF4700, TSF4701, TSF4702, TSF4703, TSF4704, TSF4705, TSF4706, TSF4707, TSF4708, TSF4709 (all being products of GE Toshiba Silicones), KF-393, KF-859, KF-860, KF-861, KF-867, KF-869, KF-880, KF-8002, KF-8004, KF-8005, KF-858, KF-864, KF-865, KF-868, KF-8003 (all being side chain type, produced by Shin-Etsu Chemical Co., Ltd.), KF-8010, X-22-161A, X-22-161B, X-22-1660B-3, KF-8008, KF-8012 (all being terminal type, produced by Shin-Etsu Chemical Co. , Ltd.), FZ-3501, FZ-3504, FZ-3508, FZ-3705, FZ-3707, FZ-3710, FZ-3750, FZ-3760, FZ-3785, and FZ-3789 (all being side chain type, produced by Nippon Unicar Company Limited). Examples of the epoxy group-modified silicone oil include TSF4730 (product of GE Toshiba Silicones), KF-1001, KF-101, KF-22-2000, KF-102 (all being side chain type, produced by Shin-Etsu Chemical Co., Ltd.), KF-105, X-22-163A, X-22-163B, X-22-163C X-22-169AS, X-22-169B, X-22-173DX (all being terminal type, produced by Shin-Etsu Chemical Co., Ltd.), L-9300, FZ-3720, FZ-3736, and Y-7499 (all being side chain type, produced by Nippon Unicar Company Limited). Examples of the alkoxy group-modified silicone oil include FZ-3704 (terminal type, produced by Nippon Unicar Company Limited). Among these, in terms of cost and workability, dimethyl silicon oil is preferred.

The pigment may be any of commonly used pigments in accordance with desired colors. Examples thereof include: inorganic pigments such as titanium oxide, ultramarine blue pigment, iron blue pigment, zinc oxide, red oxide, chrome yellow, white lead, carbon black, transparent iron oxide, and aluminum powder; and organic pigments such as azo pigments, triphenylmethane pigments, quinoline pigments, anthraquinone pigments, and phthalocyanine pigments.

The blowing agent may be appropriately selected from those used for organic foams such as polyurethane, phenol, polystyrene, and polyolefin.

In terms of workability and safety, the blowing agent used may be one compound or two or more compounds in combination selected from organic compounds such as hydrocarbons, ketone compounds, chlorofluorocarbons, and ethers.

Examples of the hydrocarbons include methane, ethane, propane, n-butane, isobutane, n-pentane, isopentane, neopentane, n-hexane, 2-methylpentane, 3-methylpentane, 2,2-dimethylbutane, 2,3-dimethylbutane, cyclopentane, cyclobutane, cyclopentane, and cyclohexane.

Examples of the ketone compounds include acetone, methyl ethyl ketone, and methyl isopropyl ketone.

Examples of the chlorofluorocarbons include trichlorofluoromethane (R11), dichlorodifluoromethane (R12), chlorotrifluoromethane (R13), bromotrifluoromethane (R13B1), tetrafluoromethane (R14), dichlorofluoromethane (R21), chlorodifluoromethane (R22), trifluoromethane (R23), difluoromethane (R32), fluoromethane (R41), tetrachlorodifluoroethane (R112), trichlorotrifluoroethane (R113), dichlorotetrafluoroethane (R114), dibromotetrafluoroethane (R114B2), chloropentafluoroethane (R115), hexafluoroethane (R116), chlorotrifluoroethane (R123), tetrafluoroethane (R134a), dichlorofluoroethane (R141b), chlorodifluoroethane (R142b), difluoroethane (R152a), octafluoropropane (R218), dichloropentafluoropropane (R225), hexafluoropropane (R236ea), pentafluoropropane (R245fa), octafluorocyclobutane (RC318), hexafluorobutane (R356mffm), pentafluorobutane (R365mfc), and decafluoropentane (R4310mee).

In consideration of environmental issues, hydrochlorofluorocarbons (HCFC), so-called alternative chlorofluorocarbons, are more preferred than chlorofluorocarbons (CFC). Moreover, use of hydrofluorocarbon (HFC) is particularly preferred. In other words, particularly excellent are tetrafluoroethane, difluoroethane, octafluoropropane, hexafluoropropane, pentafluoropropane, octafluorocyclobutane, hexafluorobutane, and pentafluorobutane.

Examples of the ethers include dimethyl ether, diethyl ether, ethyl methyl ether, dipropylether, diisopropylether, butyl methyl ether, butyl ethyl ether, tert-butyl methyl ether, tert-butyl ethyl ether, 1,1-dimethyl propyl methyl ether, methyl pentafluoroethyl ether, 2,2,2-trifluoroethyl ether, methyl(trifluoromethyl)tetrafluoroethyl ether, methyl-n-nonafluorobutyl ether, and ethyl-n-nonafluorobutyl ether.

The room temperature-curable composition of the present invention may contain a phosphorus plasticizer such as ammonium polyphosphate or tricresyl phosphate, and a flame retardant such as aluminum hydroxide, magnesium hydroxide, melamine, and thermally expandable graphite. The flame retardants may be used alone, or two or more of them may be used in combination.

The amount of the flame retardant is in a range of 5 to 200 parts by mass, and preferably in a range of 10 to 100 parts by mass, per 100 parts by weight of the reactive silyl group-containing organic polymers.

The composition of the present invention may contain a solvent as long as it does not significantly lower the adhesive strength of the bonded structure of the present invention. The use of a solvent reduces the viscosity, increases the thixotropy, and improves the workability of the composition. The solvent is not particularly limited and various compounds may be used. Specific examples thereof include: hydrocarbon solvents such as toluene, xylene, heptane, hexane, or petroleum solvents; halogen solvents such as trichloroethylene; ester solvents such as ethyl acetate and butyl acetate; ketone solvents such as acetone, methyl ethyl ketone, and methyl isobutyl ketone; ether solvents; alcohol solvents such as methanol, ethanol, and isopropanol; and silicone solvents such as haxamethylcyclotrisiloxan, octamethylcyclotetrasiloxane, and decamethylcyclopentasiloxane. In the case of using a solvent, in terms of air pollution when the composition is used in a room, the solvent preferably has a boiling point of preferably 150°C or higher, more preferably 200°C or higher, and particularly preferably 250°C or higher. These solvents may be used alone, or two or more of these may be used in combination.

If the amount of the solvent is large, the toxicity to the human body may increase or the volume of a resulting cured product may be reduced. Moreover, as mentioned above, the room temperature-curable composition of the present invention with a solvent added thereto tends to significantly lower the adhesive strength of a resulting bonded structure. Accordingly, the amount of the solvent is preferably 3 parts by weight or less, and more preferably 1 part by weight or less, per 100 parts by weight of the organic polymers. Most preferably, the composition does not contain a solvent.

Examples of the antifungal agents include, but not limited to, Vinyzene, Preventol, and Thiabendazole. These may be used alone, or two or more of these may be used in combination.

The room temperature-curable composition of the present invention may be prepared as a one-pack type composition. In the one-pack type composition, all the components are preliminary mixed and kept sealed. The composition is cured by moisture in the air after application. Alternatively, the composition may be prepared as a two-pack type or multi-pack type composition. In such a composition, an organic polymer containing a reactive silyl group and a curing agent/curing catalyst for the polymer are individually prepared and other components such as a filler, plasticizer, or water are mixed separately. The prepared components are mixed before use.

In the case of a one-pack type composition, extra operations of mixing and kneading the components before application are not needed, which avoids a measurement error (error in a mixing ratio) occurring during the operations. Accordingly, errors such as insufficient curing are avoided.

In the case of a two-pack type composition, moisture can be added only to one component. In such a case, the resulting curable composition quickly starts curing and then gives a cured product cured uniformly even at depth.

In the case of preparing a one-pack type curable composition, since all the formulation components are mixed in advance, formulation components containing water are preferably dehydrated and dried in advance, or are dehydrated, for example, under reduced pressure during the mixing and kneading. In the case of preparing a two-pack type curable composition, since a curing catalyst is not required to be mixed in the base mixture including the polymer containing a reactive silyl group, the base mixture is less likely to be gelled even if a small amount of water is left; still, if long-term storage stability is required, the formulation components are preferably dehydrated and dried. Preferred examples of the dehydrating and drying method include heat drying in the case that the formulation components are solids such as powder; and vacuum dehydration and dehydration using a substance such as synthetic zeolite, active alumina, silica gel, quick lime, and magnesium oxide in the case that the formulation components are liquids. Also, the composition may be mixed with a small amount of an isocyanate compound so that the isocyanate group and water are reacted for dehydration. The composition may also be mixed with an oxazolidine compound such as 3-ethyl-2-methyl-2-(3-methylbutyl)-1,3-oxazolidine so that the compound is reacted with water for dehydration. The storage stability can be further improved by, in addition to performing the dehydrating and drying method mentioned above, adding a lower alcohol such as methanol or ethanol.

The amount of the dehydrating agent, particularly a silicon compound reactive with water, such as vinyltrimethoxysilane or vinyltriethoxysilane, is preferably 0.1 to 20 parts by weight, and more preferably 0.5 to 10 parts by weight, per 100 parts by weight of the organic polymers containing a reactive silyl group.

The room temperature-curable composition of the present invention may be prepared by any methods including commonly used methods. Examples thereof include a method in which the aforementioned components are mixed and kneaded at room temperature or on heating using a mixer, roller, kneader, or the like; and a method in which the components are dissolved in a small amount of an appropriate solvent and then mixed.

When exposed to the air, the room temperature-curable composition of the present invention forms a three-dimensional network structure by the action of moisture, so as to be cured into a rubbery, elastic solid.

The wood material used in the present invention is not particularly limited, and preferred examples thereof include Northern White cedar, Japanese umbrella pine, Largeleaf podocarp, Castanopsis sieboldii, Juniper, Distylium racemosum, Machilus, Khaya, Formosan cypress, Taiwan cryptomeria, Pericopsis, Keruing, Azobe, Mansonia, Bubinga, Doussie, Kambala, Japanese White Birch, Danta, Makore, Movingui, Taun, Terminalia, Monkey pod, Taukyan, Thinwin, Camashi, Afrormosia, Rosewood, Vaccinium bracteatum, Yon, Red sandalwood, Merawan, Teak, Malas, Instsia, Burckella, Angelique, Japanese Cypress, Japanese cedar, Japanese hemlock, Japanese beech, Japanese larch, Lawson cypress, Camphor wood, Painted Maple, Katsura Tree, Japanese Zelkova, Japanese Horse Chestnut, Quercus gilva, Japanese Evergreen Oak, Emeri, Red meranti, Yellow meranti, Nyatoh, Kamarere, Kwila, Gonystylus bancanus, Entandrophragma utile, Black Walnut, Silver birch, Black bean, and Momi fir. In particular, Japanese beech, Japanese White Birch, Hondo spruce, Karamatsu, Douglas-fir, Pine tree, and Black locust are preferred.

«Application»

The bonded structure of the present invention may be widely used for applications in which pieces of a wood material(s) are bonded to each other, and the applications thereof is not particularly limited. For example, the bonded structure of the present invention is suitably used for architectural structures such as temples and vessels, furniture such as chests, chairs, or tables, bonded wood, laminated wood, chip boards, and fiber boards. Because of its fine boiling water-resistant adhesion, the bonded structure of the present invention can be used in an indoor part often coming into contact with water, such as pools or shower rooms, and an outdoor part.

The room temperature-curable composition of the present invention is suitably used as a wood adhesive, and can be also used for various applications mentioned below. The applications include, but not limited to: sealing materials for building and industrial purposes, such as elastic sealing materials for buildings, sealing materials for siding boards, sealing materials for multiple glass, or sealing materials for vehicles; materials for electrical and electronic parts, such as sealants for back side of solar cells; electric insulating materials such as insulating covering materials for electric wires and cables; pressure-sensitive adhesives, adhesives, elastic adhesives, contact adhesives, tiling adhesives, reactive hot-melt adhesives, coating compositions, powder coating compositions, coating materials, foams, sealing materials for can lids or the like, heat radiating sheets, potting agents for electrics and electronics, films, gaskets, marine deck caulking, casting materials, various molding materials; rustproof and waterproof sealants for artificial marbles and end faces (cut sections) of wired or laminated glass; vibration-proof/damping/soundproof/base-isolation materials used for automobiles, vessels, and household appliances; liquid sealants used for auto parts, electric parts, and various machine parts; moisture-permeable liquid waterproof coating materials for bases of exterior walls, around the openings, and roofs of buildings; concrete protective coating materials, roof coating materials for heat insulation, stone adhesives, fillers for concrete cracks, primers, injecting agents used for mending of lifting mortars and tiles, and waterproof agents.

Also, the composition can be used in the following sections of a solar cell modulus: (1) fillers used for bonding an upper transparent substrate and a lower protective film with solar cell elements placed therebetween for encapsulation of the solar cell elements; (2) protective coating materials for end portions of a solar cell modulus; (3) sealing materials for a terminal box of the solar cell modulus; (4) adhesives for bonding the terminal box of the solar cell modulus; and (5) adhesives for bonding a reinforcing bridge on the back face of the solar cell for reinforcing the solar cell modulus.

Applications of rubber-elastic molded products produced from the room temperature-curable composition of the present invention are centered around gaskets and packing. In the automotive field, the molded products may be used as: body parts such as sealing materials for maintaining the airtightness, vibration control materials for glass, or vibration-proof materials for auto bodies, especially, windshield gaskets and door-glass gaskets; chassis parts such as engine and suspension rubbers for vibration and sound proofing, especially, engine mount rubbers; engine parts such as hoses for cooling, for fuel delivery, and for emission control, and sealing materials for engine oil; and exhaust purification system parts, and brake parts. In the field of household appliances, the molded products may be used for packing, O-rings, and belts. Specific examples thereof include: decorations, water-proof packing, vibration-proof rubbers, and anti-insect packing for lighting fixtures; vibration-proof/sound-absorption/air-sealing materials for cleaners; drip-proof covers, water-proof packing, packing for heaters, packing for electrodes, safety valve diaphragm for electric water heaters; hoses, water-proof packing, magnetic valves for sake warmers; water-proof packing, water tank packing, water-absorption valves, water-vessel packing, connecting hoses, belts, packing for warming heaters, steam exit sealings and the like for steam oven ranges and vacuum bottle rice cookers; oil packing, O-rings, drain packing, compression tubes, blast tubes, air inlet/outlet packing, rubber cushions, fuel filler packing, oil gauge packing, feed tubes, diaphragm valves, air pipes and the like for burning appliances; speaker gaskets, speaker edges, turntable sheets, belts, and pulleys for audio equipment. In the architecture field, the molded products may be used for structural gaskets (zipper gaskets), pneumatic roofing materials, waterproof materials, shaped sealants, vibration-proof materials, soundproof materials, setting blocks, and sliding members. In the sports field, the molded products may be used for sports flooring such as all-weather paving materials or gym flooring, sport shoes such as soling materials or insole materials, and balls such as golf balls. In the field of rubber cushions, rubber cushions for automobiles, rubber cushions for railway cars, rubber cushions for aircrafts, and fenders. In the offshore engineering field, the molded products may be used for: structural materials such as rubber expansion joints, bearings, water sealing plates, waterproof sheets, rubber dams, elastic paving materials, vibration proof pads, or protective materials; industrial sub materials such as rubber molding frames, rubber packers, rubber skirts, sponge mats, mortar hoses, or mortar strainers; industrial subsidiary materials such as rubber sheets or air hoses;

measures for safety such as rubber buoys or wave absorber; environmental protectors such as oil fences, silt fences, antifouling materials, marine hoses, dredging hoses, or oil skimmers. Also, the molded products may be used for sheet rubber, mats, and foam sheets.

EXAMPLES

Examples 1-8 and 28-33 are not according to the present invention.

The curable composition of the present invention is described based on examples. In the following, the present invention is more specifically described with reference to synthesis examples and examples. The present invention is not limited to these synthesis examples and examples.

The molecular weight in the following synthesis examples was determined by GPC (polystyrene-equivalent molecular weight determined using a TOSOH model HLC-8120 GPC solvent delivery system, a TOSOH model TSK-GEL H type column, and THF as a solvent) . The number of silyl groups was calculated based on the amount of silyl groups determined by $^1$H-NMR (JNM-LA400 produced by JEOL Ltd.).

(Synthesis Example 1)

In a mixture containing 300 g of methyl methacrylate, 115 g of 2-ethylhexyl acrylate, 46 g of γ-methacryoxypropyltrimethoxysilane, 37 g of γ-mercaptopropyltrimethoxysilane, and 200g of IBA (isobutyl alcohol), a polymerization initiator that is 11.6 g of azobis-2-methylbutyronitrile was dissolved. The solution was added dropwise over four hours to 200 g of IBA under 105°C. Then, the mixture was subjected to polymerization for two hours to give (meth) acrylate polymers (polymer A) containing 0.075 mmol of silicon atoms per 100 g of the polymer and having a solid content concentration of 60% at a conversion rate of about 98%. The resulting polymers had a molecular weight of 2,200. The number of trimethoxysilyl groups per molecule was 1.6.

(Synthesis Example 2)

Propylene oxide was polymerized using a zinc hexacyanocobaltate glyme complex catalyst and an initiator that is polyoxypropylene glycol having a number average molecular weight of about 2,000, thereby producing polyoxypropylene glycol having a molecular weight of 28,500. To the hydroxyl group-terminated polyoxypropylene glycol, 1.2 equivalents of a NaOMe solution in methanol per hydroxyl group of the polyoxypropylene glycol was added. Then, methanol was removed. 3-Chloro-1-propene was further added to convert the terminal hydroxyl group to an allyl group. To 500 g of the resulting allyl group-terminated polyoxypropylene, 50 μl of platinum divinyldisiloxane complex (a 3 wt% (calculated as platinum) solution in isopropanol) was added, and 6.0 g of TES (triethoxysilane) was added dropwise in a slow pace with stirring. The mixed solution was subjected to a reaction at 90°C for two hours. Then, unreacted TES was removed under reduced pressure.

Subsequently, 100 g of methanol and 12 ppm of HCl were added to convert a terminal ethoxy group to a methoxy group. Accordingly, a reactive silyl group-containing polyoxypropylene polymer (B-1) terminated with a trimethoxysilyl group was obtained which had an average number of silyl groups per molecule of 1.3.

(Synthesis Example 3)

Propylene oxide was polymerized using a zinc hexacyanocobaltate glyme complex catalyst and an initiator that is polyoxypropylene glycol having a number average molecular weight of about 2,000, thereby producing polyoxypropylene glycol having a molecular weight of 14,000. To the hydroxyl group-terminated polyoxypropylene glycol, 1.2 equivalents of a NaOMe solution in methanol per hydroxyl group of the polyoxypropylene glycol was added. Then, methanol was removed. 3-Chloro-1-propene was further added to convert the terminal hydroxyl group to an allyl group. To 500 g of the resulting allyl group-terminated polyoxypropylene, 50 μl of platinum divinyldisiloxane complex (a 3 wt% (calculated as platinum) solution in isopropanol) was added, and 11.5 g of TES (triethoxysilane) was added dropwise in a slow pace with stirring. The mixed solution was subjected to a reaction at 90°C for two hours. Then, unreacted TES was removed under reduced pressure. Subsequently, 100 g of methanol and 12 ppm of HCl were added to convert a terminal ethoxy group to a methoxy group. Accordingly, a reactive silyl group-containing polyoxypropylene polymer (B-2) terminated with a trimethoxysilyl group was obtained which had an average number of silyl groups per molecule of 1.3.

(Synthesis Example 4)

Propylene oxide was polymerized using a zinc hexacyanocobaltate glyme complex catalyst and an initiator that is polyoxypropylene triol having a number average molecular weight of about 3,000, thereby producing polyoxypropylene glycol having a molecular weight of 26,000. To the hydroxyl group-terminated polyoxypropylene triol, 1.2 equivalents of a NaOMe solution in methanol per hydroxyl group of the polyoxypropylene triol was added. Then, methanol was removed. 3-Chloro-1-propene was further added to convert the terminal hydroxyl group to an allyl group. To 500 g of the resulting allyl group-terminated polyoxypropylene, 50 μl of platinum divinyldisiloxane complex (a 3 wt% (calculated as platinum) solution in isopropanol) was added, and 8.5 g of TES (triethoxysilane) was added dropwise in a slow pace with stirring. The mixed solution was subjected to a reaction at 90°C for two hours. Then, unreacted TES was removed under reduced pressure. Subsequently, 100 g of methanol and 12 ppm of HCl were added to convert a terminal ethoxy group to a methoxy group. Accordingly, a reactive silyl group-containing polyoxypropylene polymer (B-3) terminated with a trimethoxysilyl group was obtained which had an average number of silyl groups per molecule of 2.0.

(Synthesis Example 5)

Propylene oxide was polymerized using a zinc hexacyanocobaltate glyme complex catalyst and an initiator that is polyoxypropylene glycol having a number average molecular weight of about 2,000, thereby producing polyoxypropylene glycol having a molecular weight of 28,500. To the hydroxyl group-terminated polyoxypropylene glycol, 1.2 equivalents of a NaOMe solution in methanol per hydroxyl group of the polyoxypropylene glycol was added. Then, methanol was removed. 3-Chloro-1-propene was further added to convert the terminal hydroxyl group to an allyl group. To 500 g of the resulting allyl group-terminated polyoxypropylene, 50 μl of platinum divinyldisiloxane complex (a 3 wt% (calculated as platinum) solution in isopropanol) was added, and 7.4 g of TES (triethoxysilane) was added dropwise in a slow pace with stirring. The mixed solution was subjected to a reaction at 90°C for two hours. Then, unreacted TES was removed under reduced pressure. Subsequently, 100 g of methanol and 12 ppm of HCl were added to convert a terminal ethoxy group to a methoxy group. Accordingly, a reactive silyl group-containing polyoxypropylene polymer (B-4) terminated with a trimethoxysilyl group was obtained which had an average number of silyl groups per molecule of 1.6.

(Synthesis Example 6)

Propylene oxide was polymerized using a zinc hexacyanocobaltate glyme complex catalyst and an initiator that is polyoxypropylene triol having a molecular weight of about 3,000, thereby producing a hydroxyl group-terminated polypropylene oxide having a number average molecular weight of about 26,000. Using the hydroxyl group-terminated polypropylene oxide, an allyl group-terminated polypropylene oxide was prepared. To 500 g of the allyl group-terminated polyoxypropylene, 50 μl of platinum divinyldisiloxane complex (a 3 wt% (calculated as platinum) solution in isopropanol) was added, and 7 g of DMS (methyldimethoxysilane) was added dropwise in a slow pace with stirring. The mixed solution was subjected to a reaction at 90°C for two hours. Then, unreacted DMS was removed under reduced pressure. Accordingly, a reactive silyl group-containing polyoxypropylene polymer (B-5) terminated with a methyldimethoxysilyl group was obtained which had an average number of silyl groups per molecule of 2.0.

(Synthesis Example 7)

(Meth) acrylate polymer solution (polymer A) obtained in Synthesis Example 1 was mixed with 60 parts of each of the reactive silyl group-containing polyoxypropylenes (B-1 to B-5) uniformly in such a manner that the amount of (meth) acrylate polymers was 40 parts. Then, IBA was removed using a rotary evaporator. Thus, reactive silyl group-containing organic polymers (polymers C-1 to C-5) were obtained.
Exemplary preparations of curable compositions are mentioned below.

[Example 1]

To 100 parts by weight of the polymer C-1 obtained in Synthesis Example 7, 2 parts by weight of 3-aminopropyl trimethoxysilane (from Momentive Performance Materials Inc.), 2 parts by weight of vinyltrimethoxysilane (from Momentive Performance Materials Inc.), and 1 part by weight of a tin curing catalyst (NEOSTANN S-1 from NITTO KASEI CO., LTD.) were added. The mixture was well kneaded to give a curable composition.

[Examples 2 to 36] and [Comparative Examples 1 to 8]

The curable compositions were prepared in accordance with Tables 1, 2, and 3 showing formulation components and the amounts thereof, in the same manner as in Example 1. The used formulation components are mentioned below.

[Table 1]

| | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Polymer | Polymer C-1 | | 100 | | | | | | | | | | |
| | Polymer C-2 | | | 100 | | | | | | | | | |
| | Polymer C-3 | | | | 100 | | | | | | | | |
| | Polymer C-4 | | | | | 100 | | | | | | | |
| | Polymer C-5 | | | | | | 100 | | | | | | |
| | Polymer A | | | | | | | 100 | | | | | |
| | Polymer B1 | | | | | | | | 100 | | | | |
| | Polymer B2 | | | | | | | | | 100 | | | |
| | Polymer B3 | | | | | | | | | | 100 | | |
| | Polymer B4 | | | | | | | | | | | 100 | |
| | Polymer B5 | | | | | | | | | | | | 100 |
| Dehydrating agent | Vinyltrimethoxysilane | | 2 | 2 | 2 | 2 | 2 | 2 | 2 | 2 | 2 | 2 | 2 |
| Curing catalyst | NEOSTANN S-1 | | 1 | 1 | 1 | 1 | 1 | 1 | 1 | 1 | 1 | 1 | 1 |
| Silane coupling agent | 3-aminopropyltrimethoxysilane | | 2 | 2 | 2 | 2 | 2 | 2 | 2 | 2 | 2 | 2 | 2 |
| Shearing test (beech wood) | After curing at room temperature | MPa | 6.75 | 6.53 | 7.56 | 7.4 | 6.45 | 3.87 | 0.73 | 0.64 | 0.78 | 0.7 | 0.57 |
| | After boiling test | MPa | 1.87 | 1.89 | 1.96 | 1.85 | 1.75 | 0.00 | 0.68 | 0.60 | 0.68 | 0.55 | 0.50 |
| | Retention rate | % | 28% | 29% | 26% | 25% | 27% | 0% | 93% | 94% | 87% | 79% | 88% |

(continued)

| | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Dumbbell tensile test | M50 | MPa | 0.62 | 0.7 | 0.84 | 0.73 | 0.54 | Unmeasurable | 0.12 | 0.24 | 0.31 | 0.27 | 0.1 |
| | TB | | 4323 | 3.56 | 5.66 | 5.45 | 4.10 | Unmeasurable | 0.59 | 0.48 | 0.54 | 0.56 | 0.55 |
| | EB | % | 135 | 125 | 115 | 120 | 160 | Unmeasurable | 185 | 157 | 118 | 130 | 250 |

[Table 2]

| Component | Grade | | Example 6 | Example 7 | Example 8 | Example 9 | Example 10 | Example 11 | Example 12 | Example 13 | Example 14 | Comparative Example 7 | Comparative Example 8 |
|---|---|---|---|---|---|---|---|---|---|---|---|---|---|
| Polymer | Polymer C3 | | 100 | 100 | 100 | 100 | 100 | 100 | 100 | 100 | 100 | | |
| Dehydrating agent | Vinyltrimethoxysilane | | 2 | 2 | 2 | 2 | 2 | 2 | 2 | 2 | 2 | | 2 |
| Curing catalyst | NEOSTANN S-1 | | 1 | 1 | 1 | 1 | 1 | 1 | 1 | 1 | 1 | | 1 |
| Silane coupling agent | 3-Aminopropyltrimethoxysilane | | | 3 | | | 3 | | | | | | |
| | v-Glycidoxytrimethoxysilane | | | | | | | | | | 5 | | |
| | 3-Isocyanatopropyltrimethoxysilane | | | | | | | 3 | | | | | |
| | Ketiminosilane | | | | | | | | 3 | | | | |
| | 1.3.5-tris(trimethoxysilirol)isocyanurate | | | | | | | | | 3 | 3 | | |
| Epoxy resin | Bisphenol A epoxy resin | | | | 10 | 10 | 10 | 10 | 10 | 10 | 10 | 10 | 10 |
| curing agent | Ketimine | | | | | 7.4 | 7.4 | 7.4 | 7.4 | 7.4 | 7.4 | 7.4 | 7.4 |
| Epoxy Shear strength (beech wood) | After curing at room temperature | MPa | 1.73 | 5.12 | 2.45 | 7.19 | 7.84 | 7.67 | 8.50 | 7.72 | 9.19 | 1.71 | 2.48 |
| | After boiling test | MPa | 0.30 | 1.25 | 0.09 | 2.23 | 1.97 | 3.98 | 4.42 | 3.07 | 5.30 | 0.00 | 0.00 |
| | Strength retention rate | % | 17% | 24% | 4% | 31% | 25% | 52% | 52% | 40% | 58% | 0% | 0% |
| Shear strength (birch wood) | After curing at room temperature | MPa | - | - | - | Wood failure | Wood failure | Wood failure | Wood failure | Wood failure | Wood failure | - | - |
| | After boiling test | MPa | 0.04 | 2.33 | 0.08 | 4.54 | 3.23 | 4.58 | 4.06 | 4.80 | 4.76 | 0.00 | 0.64 |
| Dumbbell tensile properties | M30 / M50 / TB | MPa | 0.27 / 0.45 / 2.48 | 0.51 / 0.96 / 3.29 | 0.25 / 0.40 / 2.61 | 0.47 / 0.91 / 6.64 | 2.55 / 4.36 / 7.34 | 1.75 / 3.20 / 5.65 | 1.21 / 3.20 / 6.21 | 0.93 / 2.04 / 5.78 | 2.59 / 4.95 / 5.52 | Unmeasurable | Unmeasurable |
| | EB | % | 126 | 97 | 125 | 128 | 92 | 79 | 78 | 81 | 55 | | |

EP 2 684 690 B1

[Table 3]

| | | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|
| Polymer | Polymer C-3 | 100 | 100 | 100 | 100 | 100 | 100 | 100 | 100 | 100 | 100 | 100 |
| Dehydrating agent | Vinyltrimethoxysilane | 2 | 2 | 2 | 2 | 2 | 2 | 2 | 2 | 2 | 2 | 2 |
| Epoxy resin | Bisphenol A epoxy resin | 5 | 20 | 30 | | | 10 | 10 | 10 | 10 | 10 | 10 |
| | Hydrogenated bisphenol A epoxy resin | | | | 13 | | | | | | | |
| | Bisphenol F epoxy resin | | | | | 8.8 | | | | | | |
| Epoxy curing agent | Ketimine | 4.9 | 14.9 | 21.6 | 5.8 | 8.5 | 8.5 | 8.5 | 8.5 | 8.5 | 8.5 | 8.5 |
| Filler | Fumed silica | | | | | | 5 | | | | | |
| | Colloidal calcium carbonate | | | | | | | 50 | | | | |
| | Ground calcium carbonate | | | | | | | | 50 | | | |
| | Talc | | | | | | | | | 50 | | |
| | Titanium oxide | | | | | | | | | | 50 | |
| | Ceramic balloons | | | | | | | | | | | 5 |
| | Carbon black | | | | | | | | | | | |
| Thermoplastic resin | Styrene tackifier | | | | | | | | | | | |
| Curing catalyst | NEOSTANN S-1 | 1 | 1 | 1 | 1 | 1 | 1 | 1 | 1 | 1 | 1 | 1 |
| | NEOSTANN U-810 | | | | | | | | | | | |
| | Titanium diisopropoxy bis(ethylacetoacetate) | | | | | | | | | | | |
| | NEOSTANN U-50 | | | | | | | | | | | |
| | Versatic acid | | | | | | | | | | | |
| | Boron trifluoride monoethyl amine | | | | | | | | | | | |
| | Phenylguanidine (33% solution in methanol) | | | | | | | | | | | |
| Solvent | Exxsol D110 | | | | | | | | | | | |
| Silane coupling agent | 3-Aminopropyltrimethoxysilane | | | | | | | | | | | |
| | γ-Glycidoxytrimethoxysilane | 3 | 3 | 3 | 3 | 3 | 3 | 3 | 3 | 3 | 3 | 3 |
| | 1,3,5-tris(trimethoxysilylpropyl)isocyanurate | | | | | | | | | | | |
| Antioxidant | IRGANOX 1010 | | | | | | | | | | | |
| Thixotropic agent | Hydrogenated castor oil type | | | | | | | | | | | |
| | Amide type | | | | | | | | | | | |
| Shear strength (beech wood) | After curing at room temperature Mpa | 7.69 | 6.88 | 8.27 | 7.75 | 8.56 | 6.98 | 6.16 | 6.28 | 7.83 | 6.7 | 6.07 |
| | After boiling test MPa | 3.17 | 2.39 | 5.26 | 4.15 | 2.75 | 1.75 | 3.03 | 3.05 | 2.22 | 2.83 | 2.01 |
| | Strength retention % | 41% | 35% | 64% | 54% | 32% | 25% | 49% | 49% | 28% | 42% | 33% |
| Dumbbell tensile properties | M50 (MPa) | 2.74 | 7.27 | 9.58 | 1.37 | 2.57 | 1.07 | 1.33 | 1.04 | – | 1.24 | 1.05 |
| | TB (MPa) | 7.10 | 8.47 | 12.20 | 6.43 | 8.21 | 5.59 | 3.89 | 3.64 | 6.11 | 7.41 | 3.50 |
| | EB (%) | 78 | 58 | 62 | 90 | 75 | 117 | 89 | 112 | 45 | 105 | 50 |

| | | Example 26 | Example 27 | Example 28 | Example 29 | Example 30 | Example 31 | Example 32 | Example 33 | Example 34 | Example 35 | Example 36 |
|---|---|---|---|---|---|---|---|---|---|---|---|---|
| Polymer | Polymer C-3 | 100 | 100 | 100 | 100 | 100 | 100 | 100 | 100 | 100 | 100 | 100 |
| Dehydrating agent | Vinyltrimethoxysilane | 2 | 2 | 2 | 2 | 2 | 2 | 2 | 2 | 2 | 2 | 2 |
| Epoxy resin | Bisphenol A epoxy resin | 10 | 10 | | | | | | | 10 | 10 | 10 |
| | Hydrogenated bisphenol A epoxy resin | | | | | | | | | | | |
| | Bisphenol F epoxy resin | | | | | | | | | | | |
| Epoxy curing agent | Ketimine | 8.5 | 8.5 | | | | | | | 8.5 | 8.5 | 8.5 |
| Filler | Fumed silica | | | | | | | | | | | |
| | Colloidal calcium carbonate | | | | | | | | | 50 | 50 | 50 |
| | Ground calcium carbonate | | | | | | | | | | | |
| | Talc | | | | | | | | | | | |
| | Titanium oxide | | | | | | | | | | | |
| | Ceramic balloons | | | | | | | | | | | |
| | Carbon black | 10 | | | | | | | | | | |
| Thermoplastic resin | Styrene tackifier | | 10 | | | | | | | | | |
| Curing catalyst | NEOSTANN S-1 | 1 | 1 | | | | | | 1 | | | |
| | NEOSTANN U-810 | | | 1 | | | | | | 1 | 1 | 1 |
| | Titanium diisopropoxy bis(ethylacetoacetate) | | | | 5 | | | | | | | |
| | NEOSTANN U-50 | | | | | 3.4 | | | | | | |
| | Versatic acid | | | | | 1 | | | | | | |
| | Boron trifluoride monoethyl amine | | | | | | 0.1 | | | | | |
| | Phenylguanidine (33% solution in methanol) | | | | | | | 3 | | | | |
| Solvent | Exxsol D110 | | | | | | | | 30 | | | |
| Silane coupling agent | 3-Aminopropyltrimethoxysilane | | | 2 | 2 | 2 | 2 | 2 | | | | |
| | γ-Glycidoxytrimethoxysilane | 3 | 3 | | | | | | | 3 | 3 | 3 |
| | 1,3,5-tris(trimethoxysilylpropyl)isocyanurate | | | | | | | | | 3 | 3 | 3 |
| Antioxidant | IRGANOX 1010 | | | | | | | | | | 1 | 1 |
| Thixotropic agent | Hydrogenated castor oil type | | | | | | | | | | 2 | |
| | Amide type | | | | | | | | | | | 2 |
| Shear strength (beech wood) | After curing at room temperature Mpa | 6.11 | 7.78 | 6.04 | 4.52 | 4.43 | 4.87 | 6.56 | 4.94 | 6.98 | 6.73 | 6.88 |
| | After boiling test MPa | 2.59 | 1.83 | 2.21 | 1.95 | 1.12 | 1.75 | 1.12 | 0.90 | 5.74 | 5.50 | 5.48 |
| | Strength retention % | 42% | 24% | 37% | 43% | 25% | 36% | 17% | 18% | 82% | 82% | 80% |
| Dumbbell tensile properties | M50 (MPa) | 1.77 | 0.76 | 0.71 | 0.88 | 1.17 | 0.65 | 0.58 | 0.6 | 4.39 | 4.34 | 4.37 |
| | TB (MPa) | 4.21 | 5.08 | 6.16 | 4.66 | 7.02 | 5.95 | 5.38 | 3.78 | 6.20 | 6.10 | 5.98 |
| | EB (%) | 45 | 135 | 136 | 127 | 128 | 157 | 155 | 115 | 63 | 67 | 70 |

γ-Glycidoxypropyltrimethoxysilane (A-187 from Momentive Performance Materials Inc.)

3-Isocyanate propyl trimethoxysilane (A-LINK 35 from Momentive Performance Materials Inc.)

Ketiminosilane (KBE-9103 from Shin-Etsu Chemical Co., Ltd)

1,3,5-Tris (trimethoxysilylpropyl)isocyanurate (A-LINK597 from Momentive Performance Materials Inc.)

Bisphenol A epoxy resin (JER-828 from Mitsubishi Chemical Corporation)

Ketimine (H-30 from Mitsubishi Chemical Corporation)

Hydrogenated bisphenol A epoxy resin (Epolite 4000 from KYOEISHA CHEMICAL CO., LTD.)

Bisphenol F epoxy resin (JER-806 from Mitsubishi Chemical Corporation)

Fumed silica (R972 from AEROSIL)

Colloidal calcium carbonate (Calfort S from RHONE-POULENC CHEMICALS)

Ground calcium carbonate (2T-AV from OMYA)

Talc (Highmicron HE-5 from TAKEHARA KAGAKU KOGYO CO., LTD.)
Titanium oxide (TI PAQUE R820 from ISHIHARA SANGYO KAISHA LTD.)
Ceramic balloon (SL-150 from TAIHEIYO CEMENT CORPORATION)
Carbon black (#55, ASAHI THERMAL)
Styrene tackifier (FTR8120 from Mitsui Chemicals, Inc.)
NEOSTANN U-810 (from NITTO KASEI CO., LTD.)
Titanium diisopropoxy bis(ethylacetoacetate) (TC-750 from Matsumoto Fine Chemical Co., Ltd.)
NEOSTANN U-50 (from NITTO KASEI CO., LTD.)
Versatic acid (Versatic 10 from Hexion Specialty Chemicals)
Boron trifluoride monoethyl amine (from Wako Pure Chemical Industries, Ltd)
Phenylguanidine (from NIPPON CARBIDE INDUSTRIES CO., INC.)
Exxsol D110 (from Exxon Mobil Corporation)
IRGANOX 1010 (from Ciba Specialty Chemicals Co., Ltd.)
Hydrogenated castor oil (Disperon 308 from Kusumoto Chemical Ltd.)
Amide wax (Disperon 6500 from Kusumoto Chemical Ltd.)

Physical properties of the resulting curable compositions were evaluated by the following methods.

(Dumbbell tensile property)

Each of the curable compositions was formed into a 3 mm-thick sheet and left to stand for three days at 23°C and 50%RH. The sheet was further cured for four days at 50°. The resulting cured product was cut out into a shape of a dumbbell No. 3 in accordance with JIS K 6253. The sample was subjected to a tensile test using an autograph from Shimadzu Corporation at a tension rate of 200 mm/min. The modulus at 50% elongation, breaking strength, and breaking elongation were measured.

(Shearing test)

Each of the curable compositions was applied to pieces of a beech wood material (3.0 $\times$ 25 $\times$ 100 mm) with a spatula at 23°C and 50%RH, and they were manually pressure-bonded. The resulting test sample was measured in accordance with JIS K 6850.

(Strength retention rate)

The value of shear strength after the boiling test was divided by the value of shear strength after curing at room temperature. The resulting value was regarded as the retention rate of shear strength before and after the boiling test.

(Boiling test)

Each of the curable compositions was applied to pieces of a beech wood material (3.0 $\times$ 25 $\times$ 100 mm) or a birch wood material (3.0 $\times$ 25 $\times$ 100 mm) with a spatula at 23°C and 50%RH, and they were manually pressure-bonded. The composition was cured for seven days at 23°C and 50%RH. The resulting sample was immersed in boiling water for six hours and then in water at 23°C for two hours. The resulting sample was then subjected to measurement in accordance with JIS K 6850.

INDUSTRIAL APPLICABILITY

The bonded structure of the present invention can be widely used for applications of bonding pieces of a wood material (s) to each other. The preferred applications are not particularly limited, and include buildings such as temples and vessels, furniture such as chest, chairs, and tables, bonded wood, laminated wood, chip boards, and fiber boards.

## Claims

1.   A bonded structure, comprising a room temperature-curable composition and pieces of a wood material bonded with the room temperature-curable composition,
wherein the room temperature-curable composition comprises:

a (meth)acrylate polymer (A) that contains a reactive silyl group represented by the following formula (1):

$$-SiX_3 \qquad (1)$$

wherein X represents a hydroxyl or hydrolyzable group,
a polyoxyalkylene polymer (B) that contains a reactive silicon represented by the following formula (2):

$$-SiR^1_{3-b}Y_b \qquad (2)$$

wherein $R^1$ represents a C1-10 alkyl group, a C6-10 aryl group, or a C7-10 aralkyl group; Y represents a hydroxyl or hydrolyzable group; b represents 1, 2, or 3; and when two or more $R^{1'}$ s or Y' s are present, they may be the same as or different from each other
an epoxy resin (C), and
a ketimine (D).

2. The bonded structure according to Claim 1,
wherein the reactive silyl group in the (meth)acrylate polymer (A) is a trimethoxysilyl group.

3. The bonded structure according to Claim 1 or 2,
wherein the (meth)acrylate polymer (A) contains the reactive silyl group represented by the formula (1) and has a silicon atom content of 0.04 to 0.10 mol per 100 g of the (meth)acrylate polymer (A).

4. The bonded structure according to any one of Claims 1 to 3,
wherein the Y in the formula (2) is a methoxy group.

5. The bonded structure according to any one of Claims 1 to 4,
wherein the polyoxyalkylene polymer (B) has a branched structure.

6. The bonded structure according to any one of Claims 1 to 5,
wherein the epoxy resin (C) is a bisphenol A epoxy resin.

7. The bonded structure according to any one of Claims 1 to 6, further comprising
a silane coupling agent (E).

8. The bonded structure according to Claim 7,
wherein the silane coupling agent (E) has at least two reactive silyl groups per molecule.

9. The bonded structure according to Claim 8,
wherein the silane coupling agent having at least two reactive silyl groups per molecule is an isocyanurate group-containing silane coupling agent.

10. The bonded structure according to any one of Claims 1 to 9, further comprising
an inorganic filler (F).

11. The bonded structure according to Claim 10,
wherein the inorganic filler (F) is calcium carbonate.

**Patentansprüche**

1. Gebondete Struktur, umfassend eine bei Raumtemperatur aushärtbare Zusammensetzung und Stücke aus Holzmaterial, die an die bei Raumtemperatur aushärtbare Zusammensetzung gebondet sind,
wobei die bei Raumtemperatur aushärtbare Zusammensetzung umfasst:

ein (Meth)acrylatpolymer (A), das eine durch die folgende Formel (1) dargestellte reaktive Silylgruppe enthält:

$$-SiX_3 \qquad (1)$$

wobei X eine Hydroxyl- oder eine hydrolysierbare Gruppe darstellt,

ein Polyoxyalkylenpolymer (B), das ein durch die folgende Formel (2) dargestelltes reaktives Silicium enthält:

$$-SiR^1_{3-b}Y_b \qquad (2)$$

wobei $R^1$ eine C1-10 Alkylgruppe, eine C6-10 Arylgruppe oder eine C7-10 Aralkylgruppe darstellt, Y eine Hydroxyl- oder eine hydrolysierbare Gruppe darstellt, b 1, 2 oder 3 darstellt, und wobei, wenn zwei oder mehr $R^1$s oder Ys vorhanden sind, diese gleich oder verschieden voneinander sein können,
ein Epoxidharz (C) und
ein Ketamin (D).

2. Gebondete Struktur nach Anspruch 1,
wobei die reaktive Silylgruppe in dem (Meth)acrylatpolymer (A) eine Trimethoxysilylgruppe ist.

3. Gebondete Struktur nach Anspruch 1 oder 2,
wobei das (Meth)acrylatpolymer (A) die durch die Formel (1) dargestellte Silylgruppe enthält und einen Siliciumatomgehalt von 0,04 bis 0,10 Mol pro 100 g des (Meth)acrylatpolymers (A) aufweist.

4. Gebondete Struktur nach einem der Ansprüche 1 bis 3,
wobei das Y in der Formel (2) eine Methoxygruppe ist.

5. Gebondete Struktur nach einem der Ansprüche 1 bis 4,
wobei das Polyoxyalkylenpolymer (B) eine verzweigte Struktur aufweist.

6. Gebondete Struktur nach einem der Ansprüche 1 bis 5,
wobei das Epoxidharz (C) ein Bisphenol A Epoxidharz ist.

7. Gebondete Struktur nach einem der Ansprüche 1 bis 6, ferner umfassend
ein Silankopplungsmittel (E).

8. Gebondete Struktur nach Anspruch 7,
wobei das Silankopplungsmittel (E) wenigstens zwei reaktive Silylgruppen pro Molekül aufweist.

9. Gebondete Struktur nach Anspruch 8,
wobei das Silankopplungsmittel, das wenigstens zwei reaktive Silylgruppen pro Molekül aufweist, ein isocyanuratgruppenhaltiges Silankopplungsmittel ist.

10. Gebondete Struktur nach einem der Ansprüche 1 bis 9, ferner umfassend
einen anorganischen Füllstoff (F).

11. Gebondete Struktur nach Anspruch 10,
wobei der anorganische Füllstoff (F) Calciumcarbonat ist.


**Revendications**

1. Structure liée, comprenant une composition durcissable à température ambiante et des morceaux d'un matériau de bois liés avec la composition durcissable à température ambiante,
dans laquelle la composition durcissable à température ambiante comprend :

un polymère de (méth)acrylate (A) qui contient un groupe silyle réactif représenté par la formule (1) suivante :

$$-SiX_3 \qquad (1)$$

où X représente un groupe hydroxyle ou hydrolysable,
un polymère de type polyoxyalkylène (B) qui contient un silicium réactif représenté par la formule (2) suivante :

$$-SiR^1_{3-b}Y_b \qquad (2)$$

où R$^1$ représente un groupe alkyle en C1-10, un groupe aryle en C6-10, ou un groupe aralkyle en C7-10 ; Y représente un groupe hydroxyle ou un groupe hydrolysable ; b représente 1, 2, ou 3 ; et lorsque deux ou plusieurs R$^1$ ou Y sont présents, ils peuvent être identiques ou différents les uns des autres

une résine époxy (C), et

une cétimine (D).

2.  Structure liée selon la revendication 1,
    dans laquelle le groupe silyle réactif dans le polymère de (méth)acrylate (A) est un groupe triméthoxysilyle.

3.  Structure liée selon la revendication 1 ou 2,
    dans laquelle le polymère de (méth)acrylate (A) contient le groupe silyle réactif représenté par la formule (1) et présente une teneur en atome de silicium de 0,04 à 0,10 mole par 100g du polymère de (méth)acrylate (A).

4.  Structure liée selon l'une quelconque des revendications 1 à 3,
    dans laquelle le Y dans la formule (2) est un groupe méthoxy.

5.  Structure liée selon l'une quelconque des revendications 1 à 4,
    dans laquelle le polymère de type polyoxyalkylène (B) présente une structure ramifiée.

6.  Structure liée selon l'une quelconque des revendications 1 à 5,
    dans laquelle la résine époxy (C) est une résine époxy de bisphénol A.

7.  Structure liée selon l'une quelconque des revendications 1 à 6, comprenant de plus
    un agent de couplage de silane (E).

8.  Structure liée selon la revendication 7,
    dans laquelle l'agent de couplage de silane (E) présente au moins deux groupes silyle réactifs par molécule.

9.  Structure liée selon la revendication 8,
    dans laquelle l'agent de couplage de silane ayant au moins deux groupes silyle réactifs par molécule est un agent de couplage de silane contenant un groupe isocyanurate.

10. Structure liée selon l'une quelconque des revendications 1 à 9, comprenant de plus
    une charge inorganique (F).

11. Structure liée selon la revendication 10,
    dans laquelle la charge inorganique (F) est le carbonate de calcium.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2289997 A1
- JP 2004323589 A
- WO 20033016368 A
- WO 2009133811 A
- JP H0314068 B
- JP H0455444 B
- JP H06211922 A
- JP H09272714 A
- JP S61197631 A
- JP S61215622 A
- JP S61215623 A
- JP 61218632 A
- JP S4627250 B
- JP S5915336 B
- JP H10273512 A
- JP S4612154 B
- US 3632557 A
- JP S58109529 A
- US 4374237 A
- JP S6213430 A
- US 4645816 A
- JP H0853528 A
- EP 0676403 A
- JP H10204144 A
- EP 0831108 A
- JP 2003508561 T
- US 6197912 B
- JP H06211879 A
- US 5364955 A
- JP H1053637 A
- US 5756751 A
- JP H11100427 A
- JP 2000169544 A
- JP 2000169545 A
- JP 2002212415 A
- JP 3313360 B
- US 4067844 A
- US 3711445 A
- JP 2001323040 A
- JP H11279249 A
- US 5990257 A
- JP 2000119365 A
- US 6046270 A
- JP S5829818 A
- US 4345053 A
- JP H0347825 A
- US 5068304 A
- JP H1160724 A
- JP 2002155145 A
- JP 2002249538 A
- WO 03018658 A
- WO 03059981 A
- JP S59122541 A
- JP S63112642 A
- JP H06172631 A
- JP H11116763 A
- JP S5978223 A
- JP S59168014 A
- JP S60228516 A
- JP S60228517 A
- JP H0469659 B
- JP H07108928 B
- JP S63254149 A
- JP S6422904 A
- JP 2001131428 A
- JP H11349916 A
- JP 2003155389 A
- JP 2001207157 A
- JP H05117521 A
- JP H11241029 A
- JP H07258534 A
- JP H06279693 A
- JP H03160053 A
- JP H04283259 A
- JP H09194731 A
- JP H0570531 A

**Non-patent literature cited in the description**

- **MATYJASZEWSKI et al.** *Journal of the American Chemical Society (J. Am. Chem. Soc.),* 1995, vol. 117, 5614
- Kankosei Jushi (Photosensitive Resins). Insatsu Gakkai Shuppanbu Ltd, 17 March 1972, 93 ff, , 106 ff, , 117 ff